(19) **Europäisches Patentamt / European Patent Office / Office européen des brevets**

(11) **EP 4 173 698 A1**

(12) **EUROPEAN PATENT APPLICATION**
published in accordance with Art. 153(4) EPC

(43) Date of publication:
**03.05.2023 Bulletin 2023/18**

(21) Application number: **21834487.7**

(22) Date of filing: **30.06.2021**

(51) International Patent Classification (IPC):
**B01D 63/02** (2006.01)     **B01D 69/00** (2006.01)
**B01D 69/02** (2006.01)

(52) Cooperative Patent Classification (CPC):
**B01D 63/02; B01D 69/00; B01D 69/02**

(86) International application number:
**PCT/JP2021/024727**

(87) International publication number:
**WO 2022/004780 (06.01.2022 Gazette 2022/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.06.2020 JP 2020112493**

(71) Applicant: **Toray Industries, Inc.**
**Tokyo 103-8666 (JP)**

(72) Inventors:
• **KOBAYASHI Kentaro**
  **Otsu-shi, Shiga 520-8558 (JP)**
• **KOZAKI Yoichiro**
  **Otsu-shi, Shiga 520-8558 (JP)**
• **KANAMORI Satoko**
  **Otsu-shi, Shiga 520-8558 (JP)**
• **KOBAYASHI Atsushi**
  **Otsu-shi, Shiga 520-8558 (JP)**

(74) Representative: **Hoefer & Partner Patentanwälte mbB**
**Pilgersheimer Straße 20**
**81543 München (DE)**

(54) **HOLLOW FIBER MEMBRANE MODULE FOR CROSS-FLOW FILTRATION AND OPERATION METHOD THEREOF**

(57)     The present invention relates to a hollow fiber membrane module for cross-flow filtration including: a container having at least a raw water inlet, a raw water outlet, and a filtrate outlet; and a plurality of hollow fiber membranes housed in the container, in which in the plurality of hollow fiber membranes, an end portion on a raw water inlet side is sealed and an end portion on a filtrate outlet side is opened, and the plurality of hollow fiber membranes have a potting portion fixed by an adhesive at least in the end portion on the filtrate outlet side, a raw water side space in the container to which the raw water inlet and the raw water outlet are connected and a filtrate side space in the container to which the filtrate outlet is connected are separated by the plurality of hollow fiber membranes and the potting portion, and the raw water side space is in contact with an outer surface of the hollow fiber membranes, and a pure water permeability K ($m^3/m^2/hr/50$ kPa) of the hollow fiber membranes and an inner diameter $D_i$ ($\mu$m) of the hollow fiber membranes satisfy the following requirements: $2.0 \leq K \leq 20.0$; and $350 \leq D_i \leq 600$.

*FIG. 1*

**Description**

TECHNICAL FIELD

The present invention relates to a hollow fiber membrane module for cross-flow filtration and an operation method thereof.

BACKGROUND ART

Membrane filtration using a separation membrane is employed in various fields including a water treatment field such as drinking water production, water purification treatment, or wastewater treatment, a fermentation field including culturing of microorganisms or cultured cells, and a food industry field. Among these, membrane filtration using a hollow fiber membrane module is used in many fields in consideration of an amount of water to be treated, the ease of washing, and the like.

In the food industry field, the turbidity of a raw water is often higher than that of a raw water in the water treatment field, and in a dead-end filtration operation which is often adopted in the water treatment field, clogging of a hollow fiber membrane, that is, so-called fouling rapidly proceeds. Therefore, in the present application, a cross-flow filtration operation capable of further preventing fouling is performed. The cross-flow filtration operation is a method in which a flow of a raw water parallel to a surface of a hollow fiber membrane is constantly made to occur, and a part of the raw water is filtered. In this method, since the operation can be performed while preventing accumulation of suspended substances on the surface of the hollow fiber membrane by the action of the flow parallel to the surface of the hollow fiber membrane, fouling can be significantly reduced.

In general, in a filtration operation of an outside-in hollow fiber membrane module, a pressure loss occurs inside a hollow fiber due to an influence of liquid flow resistance inside the hollow fiber, and thus a difference occurs in transmembrane pressures in an axial direction of the hollow fiber membrane. In addition, in the cross-flow filtration operation, in addition to the liquid flow resistance inside the hollow fiber membrane, a pressure loss due to the flow of the raw water also occurs outside the hollow fiber membrane. Due to this pressure loss, the transmembrane pressure at a raw water inlet side of the hollow fiber membrane module tends to increase, and the transmembrane pressure at a filtrate outlet side tends to decrease. That is, the difference in the transmembrane pressures in the axial direction of the hollow fiber membrane increases. Further, depending on operation conditions, a reverse phenomenon in which the filtrate side pressure is higher than the raw water side pressure in the vicinity of a filtrate outlet side of the hollow fiber membrane occurs, and a filtrate may flow backward. In order to compensate for an amount of the filtrate flowing backward in the vicinity of the filtrate outlet, an excessive amount of the raw water is filtered in the vicinity of the raw water inlet side of the hollow fiber membrane. As a result, a difference occurs in filtration fluxes in the axial direction of the hollow fiber membrane. In a case where the operation is performed in such a state, the progress of fouling becomes fast at a place where the filtration fluxes are fast, and the progress of fouling is accelerated in the entire membrane module.

When fouling reaches a certain state, the membrane module is cleaned with a chemical liquid to eliminate fouling, but there is a problem that the frequency of chemical cleaning increases due to the fast progress of fouling. In the dead-end filtration operation, the pressure loss inside the hollow fiber membrane is dominant, but in the cross-flow filtration operation, in addition to the liquid flow resistance inside the hollow fiber membrane, a pressure loss due to the flow of the raw water also occurs outside the hollow fiber membrane. Therefore, depending on operation conditions, a reverse phenomenon in which the filtrate side pressure is higher than the raw water side pressure in the vicinity of the filtrate outlet side of the hollow fiber membrane occurs, and a filtrate flows backward. In order to compensate for an amount of the filtrate flowing backward in the vicinity of the filtrate outlet side, an excessive amount of the raw water is filtered in the vicinity of the raw water inlet side of the hollow fiber membrane. In the cross-flow filtration operation, although the accumulation of suspended substances on the surface of the hollow fiber membrane due to the flow of the raw water is prevented as described above, a phenomenon in which fouling of the raw water inlet side becomes faster due to an increase in the pressure loss on the raw water side also occurs, and as a result, there is a problem that fouling of the entire module progresses.

Patent Literature 1 discloses a method of forming a membrane module in which the water permeability on an opening end side where a filtration flux is large is reduced and the water permeability on a sealing end side where the filtration flux is small is increased, and succeeds in reducing a difference in transmembrane pressure. Patent Literature 2 discloses a method of reducing a difference in transmembrane pressure by changing an outer diameter, an inner diameter, and a membrane pressure in an axial direction of a hollow fiber membrane.

CITATION LIST

PATENT LITERATURE

Patent Literature 1: JPH04-11927A
Patent Literature 2: JPH07-96152A

SUMMARY OF INVENTION

TECHNICAL PROBLEM

In these methods, it is necessary to control the performance of a membrane in the axial direction, but in order to manufacture such a membrane, a membrane manufacturing process thereof is complicated and troublesome, which is not realistic. Therefore, there has been a demand for a technique for preventing a backflow in the vicinity of a filtrate outlet in a general-purpose hollow fiber membrane having uniform performance in the axial direction.
Therefore, an object of the present invention is to prevent an increase in a difference in transmembrane pressure of a hollow fiber membrane and a backflow of a filtrate in the vicinity of a filtrate outlet side, which are caused by a pressure loss on a raw water side due to a stream of cross flow, and to reduce progress of membrane fouling.

SOLUTION TO PROBLEM

In order to achieve the above-mentioned object, the present invention provides the following hollow fiber membrane module for cross-flow filtration and operation method thereof.

<1> A hollow fiber membrane module for cross-flow filtration including:

a container having at least a raw water inlet, a raw water outlet, and a filtrate outlet; and
a plurality of hollow fiber membranes housed in the container,
in which in the plurality of hollow fiber membranes, an end portion on a raw water inlet side is sealed and an end portion on a filtrate outlet side is opened, and the plurality of hollow fiber membranes have a potting portion fixed by an adhesive at least in the end portion on the filtrate outlet side,
a raw water side space in the container to which the raw water inlet and the raw water outlet are connected and a filtrate side space in the container to which the filtrate outlet is connected are separated by the plurality of hollow fiber membranes and the potting portion, and the raw water side space is in contact with an outer surface of the hollow fiber membranes, and
a pure water permeability K ($m^3/m^2$/hr/50 kPa) of the hollow fiber membranes and an inner diameter $D_i$ ($\mu$m) of the hollow fiber membranes satisfy the following requirements:

$$2.0 \le K \le 20.0;$$

and

$$350 \le D_i \le 600.$$

<2> The hollow fiber membrane module for cross-flow filtration according to <1>, in which an axial length L (m) of the hollow fiber membranes in contact with a raw water satisfies $0.5 \le L \le 2.0$.
<3> The hollow fiber membrane module for cross-flow filtration according to <1> or <2>, in which an outer diameter $D_o$ ($\mu$m), a filling rate M (%), and the inner diameter $D_i$ ($\mu$m) of the hollow fiber membranes satisfy the following expression (2):

$$0.33 \times D_o - 10 \times M + 420 \le D_i \le 0.33 \times D_o - 10 \times M + 550 \cdots (2).$$

<4> The hollow fiber membrane module for cross-flow filtration according to <3>, in which the filling rate M (%) satisfies the following requirement:

$$25 \leq M \leq 45.$$

<5>The hollow fiber membrane module for cross-flow filtration according to <3> or <4>, in which the outer diameter $D_o$ ($\mu$m) satisfies the following requirement:

$$850 \leq D_o \leq 1500.$$

<6> The hollow fiber membrane module for cross-flow filtration according to <1> or <2>, in which a ratio $D_t/D_i$ of a membrane thickness Dt ($\mu$m) of the hollow fiber membranes to the inner diameter $D_i$ ($\mu$m) satisfies the following requirement:

$$0.40 \leq D_t/D_i \leq 0.65.$$

<7> The hollow fiber membrane module for cross-flow filtration according to any one of <1> to <6>, in which a strength of the hollow fiber membranes is 250 gf/fiber or more.

<8> The hollow fiber membrane module for cross-flow filtration according to any one of <1> to <7>, in which a ratio $S_f/S_p$ of a cross-sectional area $S_f$ of the raw water inlet to a flow path area $S_p$ in the container is 0.35 or more.

<9> An operation method of a hollow fiber membrane module, including performing cross-flow filtration using the hollow fiber membrane module for cross-flow filtration according to any one of <1> to <8> such that a filtration flux J (m/d) and a cross-flow velocity v (m/s) satisfy the following requirements:

$$0.5 \leq J \leq 2.0;$$

and

$$1.0 \leq v \leq 1.8.$$

<10> The operation method of a hollow fiber membrane module according to <9>, in which the cross-flow filtration is performed to a raw water having a turbidity of 20 NTU or more and a TOC concentration of 1,000 mg/L or more.

<11> The operation method of a hollow fiber membrane module according to <10>, in which a filtrate has a turbidity of 10 NTU or less, and a TOC concentration of 1,000 mg/L or more.

<12> The operation method of a hollow fiber membrane module according to any one of <9> to <11>, in which the cross-flow filtration is performed to a raw water having a viscosity of 2 mPa·s or more.

ADVANTAGEOUS EFFECTS OF INVENTION

According to the present invention, it is possible to reduce the difference in transmembrane pressure in the axial direction of the hollow fiber membrane and reduce the progress of fouling while preventing the backflow in the vicinity of the filtrate outlet during the cross-flow filtration operation.

BRIEF DESCRIPTION OF DRAWINGS

FIG. 1 is a schematic diagram illustrating an embodiment of a hollow fiber membrane module of the present invention.
FIG. 2 is a schematic flow diagram illustrating an embodiment of a membrane filtration unit to which a dead-end filtration operation is applied.
FIG. 3 is a schematic flow diagram illustrating an embodiment of a membrane filtration unit to which cross-flow filtration is applied.
FIG. 4 is a schematic flow diagram illustrating another embodiment of the membrane filtration unit to which the cross-flow filtration is applied.

FIG. 5 is a schematic diagram illustrating a model for simulating a pressure distribution in the hollow fiber membrane module.

FIG. 6 is a schematic flow diagram illustrating an embodiment of a membrane filtration unit for verifying a simulation.

DESCRIPTION OF EMBODIMENTS

Hereinafter, embodiments of the present invention will be described in detail with reference to the drawings, but the present invention is not limited thereto.

In the present description, "mass" has the same meaning as "weight".

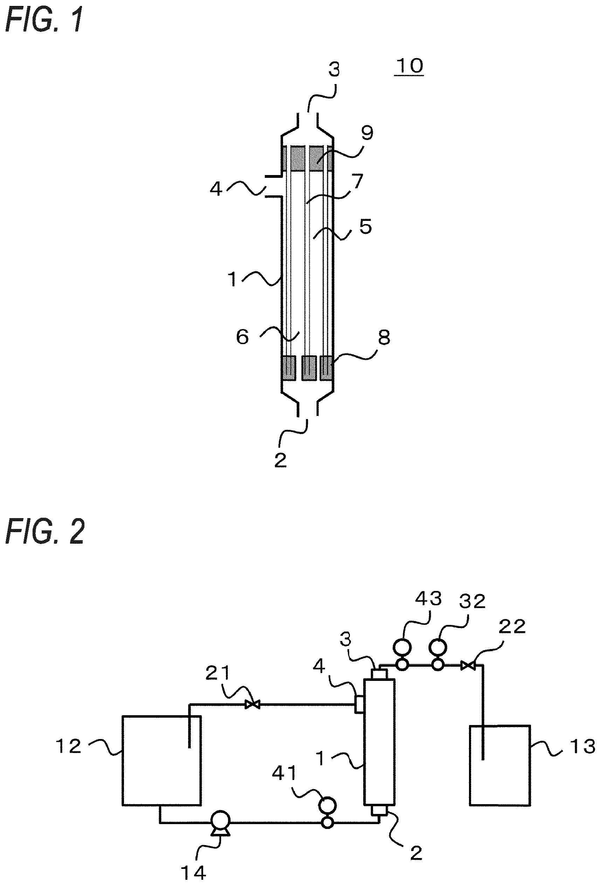

FIG. 1 is a schematic diagram illustrating an embodiment of a hollow fiber membrane module for cross-flow filtration (hereinafter, also referred to as a hollow fiber membrane module) of the present invention. Hereinafter, in the present description, directions such as "upper" and "lower" are based on a state illustrated in the drawings for convenience, and in FIG. 1, a filtrate outlet 3 side is referred to as an upper direction, and a raw water inlet 2 side is referred to as a lower direction.

In a hollow fiber membrane module for cross-flow filtration 10 of the present invention, a container 1 having a raw water inlet 2, a filtrate outlet 3, and a raw water outlet 4 is filled with hollow fiber membranes 5. Both end portions of the hollow fiber membrane 5 are embedded in a first potting portion 8 and a second potting portion 9, and the first potting portion 8 and the second potting portion 9 are fixed to the container 1. A lower end portion of the hollow fiber membrane 5 embedded in the first potting portion 8 is sealed. The first potting portion 8 includes a plurality of through holes through which a raw water introduced from the raw water inlet 2 passes. On the other hand, an upper end portion of the hollow fiber membrane 5 embedded in the second potting portion 9 is embedded in an open state.

The raw water inlet 2, the filtrate outlet 3, and the raw water outlet 4 are cylindrical nozzles that connect the container 1 and pipes (not illustrated), and are fixed to the container 1 also having a cylindrical shape in an open state. The raw water inlet 2 is connected to a lower end portion of the container 1, and the filtrate outlet 3 is connected to an upper end portion of the container 1. The raw water outlet 4 is connected to a side surface of the container 1 and is provided in the vicinity of the second potting portion 9. These materials may be made of resin or metal.

The hollow fiber membrane 5 housed in the container 1 is a membrane of a hollow fiber shape having a liquid separation function and made of a polymer. The hollow fiber membrane 5 is housed in the container 1 such that the axial direction of the container 1 and the axial direction of the hollow fiber membrane 5 are parallel to each other. The axial directions refer to a longitudinal direction of the container 1 and a longitudinal direction of the hollow fiber membrane 5.

The first potting portion 8 and the second potting portion 9 in which a plurality of hollow fiber membranes are fixed by an adhesive refer to portions in which gaps between bundled hollow fibers are filled with a potting agent containing a potting resin as a main component, which is a so-called adhesive. The potting portion is preferably formed at an end portion of a hollow fiber membrane bundle.

The potting resin serving as the main component of the potting agent is preferably an epoxy resin, a polyurethane resin, or a silicone resin, which is excellent in adhesiveness to hollow fiber membrane, heat resistance, and chemical durability. In addition, the potting agent may contain, for example, an additive such as silica, talc, mica, clay, calcium carbonate, glass, or rubber in addition to the potting resin.

The first potting portion 8 is formed at an end portion of the hollow fiber membrane 5 on the raw water inlet side. The end portion of the hollow fiber membrane 5 on the raw water inlet side is sealed. Being sealed means a state in which a liquid flowing inside the hollow fiber membrane 5 is not led out from the sealed end portion. The first potting portion 8 is fixed to the container 1, but has a plurality of through holes through which the raw water introduced from the raw water inlet 2 passes, and the raw water is introduced into the hollow fiber membrane 5 through the through holes. The shape and the number of the through holes are not specified, and the through holes are appropriately provided in order to prevent an occurrence of resistance and flow unevenness in accordance with a flow rate of the raw water passing through.

The first potting portion 8 may be fixed at any position such that the first potting portion 8 does not float due to the flow of the raw water, and may have a cartridge structure that can be bonded and fixed to or removed from the container 1. A method of fixing the position is not particularly specified, and a structure for fixing the first potting portion 8 at a position between the container 1 and the first potting portion 8, a structure for fixing the first potting portion 8 at a position between the second potting portion 9 and the first potting portion 8, or the like can be appropriately selected.

In addition, the first potting portion 8 is not essential as long as the end portion of the hollow fiber membrane 5 on the raw water inlet side is sealed, and may be a free end that is not fixed by the potting agent, instead of a so-called fixed end that fixes hollow fiber membrane bundles to each other by the potting agent. The free end represents a state in which hollow fiber membranes are not fixed to each other by a potting agent and are freely movable. In this case, as a method of sealing the end portion of the hollow fiber membrane 5 on the raw water inlet side, a method of sealing by injecting a potting agent into a hollow portion of the hollow fiber membrane 5, a method of sealing by welding the end portion with heat, or the like can be applied.

Next, the second potting portion 9 is formed at the end portion of the hollow fiber membrane 5 on the filtrate outlet side, and fixes the end portion of the hollow fiber membrane 5 on the filtrate outlet side in an open state. The open state is a state in which the liquid flowing inside the hollow fiber membrane is led out from the end portion that is open.

Although the second potting portion 9 is fixed to the container 1, as long as the raw water and the filtrate can be separated in a liquid-tight manner, the second potting portion 9 and the container 1 may be bonded and fixed to each other, or may be implemented as a structure in which a hollow fiber membrane can be attached and detached, such as a so-called cartridge type. In the case of the cartridge type structure, the second potting portion 9 and the container 1 may be connected via an O-ring or the like.

In the hollow fiber membrane module having the above structure, the inside of the container 1 is separated by the hollow fiber membrane 5 and the second potting portion 9 into a raw water side space 6 filled with the raw water and a filtrate side space 7 filled with the filtrate, and the raw water side space 6 is a space with which an outer surface of the hollow fiber membrane 5 is in contact, and the filtrate side space 7 is a space with which an inner surface of the hollow fiber membrane 5 is in contact.

The present invention is an invention applied to a so-called outside-in hollow fiber membrane module in which the raw water inlet 2 and the raw water outlet 4 are connected to the raw water side space 6, and the filtrate outlet 3 is connected to the filtrate side space 7. Another embodiment of the hollow fiber membrane module includes an inside-out hollow fiber membrane module, but the present invention cannot be applied to the inside-out hollow fiber membrane module.

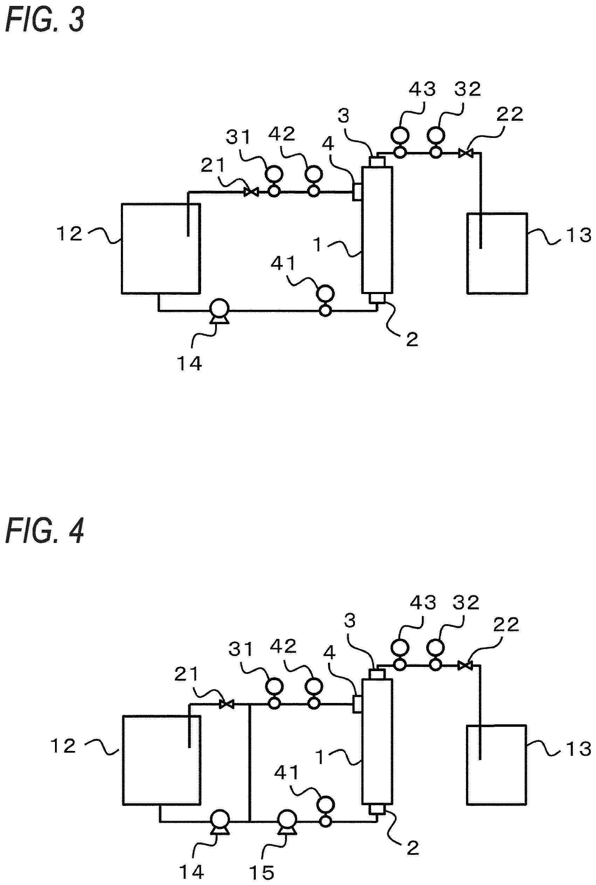

Next, an operation method using the hollow fiber membrane module illustrated in FIG. 1 will be described with reference to FIG. 2 and FIG. 3.

FIG. 2 is a flowchart of a membrane filtration unit to which a dead-end filtration operation is applied. The raw water is supplied from a raw water tank 12 to the container 1 by a supply pump 14. The raw water introduced into the container 1 through the raw water inlet 2 passes through the through holes of the first potting portion 8 illustrated in FIG. 1, and is sent through the raw water side space 6 in a flow parallel to the axial direction of the hollow fiber membrane 5. Thereafter, the raw water is led out from the container 1 through the raw water outlet 4. The led out raw water may be discharged to the outside of the system or may be returned to the raw water tank 12. After the raw water side space 6 is filled up with the raw water, a concentrate valve 21 is closed and a filtrate valve 22 is opened in a state where the supply pump 14 is operated, whereby the raw water is pressurized, and the raw water permeates through the hollow fiber membrane 5 and moves to the filtrate side space 7. Thereafter, the raw water passes through the inside of the hollow fiber membrane 5 and is led out from the filtrate outlet through an open end surface of the second potting portion 9. The led out filtrate is sent to a filtrate tank 13.

Such an operation method is referred to as a dead-end filtration operation. In the dead-end filtration operation, the operation is often performed such that a filtration flow rate observed by a filtrate flowmeter 32 is constant. In this case, a difference between a raw water introduction pressure P1 observed by a raw water introduction pressure gauge 41 and a filtrate lead-out pressure P3 observed by a filtrate lead-out pressure gauge 43 is referred to as a transmembrane pressure, and the operation is continued until the transmembrane pressure reaches a predetermined pressure.

In the dead-end filtration operation, the pressure loss in the raw water side space 6 is very small because a flow in the raw water side space 6 is slow. Inside the hollow fiber membrane, since the filtrate flows through a narrow flow path, although a pressure loss due to liquid flow resistance occurs, the pressure loss on the raw water side is small, and thus the difference in transmembrane pressure in the axial direction of the hollow fiber membrane is relatively small.

On the other hand, FIG. 3 is a flowchart of a membrane filtration unit to which a cross-flow filtration operation is applied. As in the case of the dead-end filtration operation, the raw water is supplied from the raw water tank 12 to the container 1 by the supply pump 14. The raw water introduced into the container 1 through the raw water inlet 2 passes through the through holes of the first potting portion 8 illustrated in FIG. 1, and is sent through the raw water side space 6 in a flow parallel to the axial direction of the hollow fiber membrane 5. Thereafter, the raw water is led out from the container 1 through the raw water outlet 4.

The cross-flow filtration operation is an operation method in which, by circulating at a flow rate of about 10 times to 30 times the filtration flow rate, membrane clogging components derived from the raw water can be prevented from accumulating on the surface of the membrane due to a flow shearing effect, and stable filtration is possible. In particular, this is an operation method suitable for filtering a raw water containing a large amount of clogging components accumulated on the surface of the membrane.

Also in the cross-flow filtration operation, the operation is often performed such that the filtration flow rate observed by the filtrate flowmeter 32 is constant. Further, the operation is performed such that a concentrate circulation flow rate observed by a concentrate flowmeter 31 is also constant. In the cross-flow filtration operation, a difference between the filtrate lead-out pressure P3 observed by the filtrate lead-out pressure gauge 43 and an average value of the raw water introduction pressure P1 and a raw water lead-out pressure P2 respectively observed by the raw water introduction pressure gauge 41 and a raw water lead-out pressure gauge 42 is referred to as a transmembrane pressure, and the operation is continued until the transmembrane pressure reaches a predetermined pressure.

FIG. 4 is a flowchart of another embodiment of the membrane filtration unit to which the cross-flow filtration operation is applied. In the cross-flow filtration operation, an amount of circulated liquid is large, and pump power is larger than that of the dead-end filtration. Therefore, an operation method is also adopted in which the supply pump 14 having a small flow rate and a large head and a circulation pump 15 having a large flow rate and a small head are combined to reduce a circulation flow rate. In this case, it is preferable that a part or the whole amount of the raw water led out from the raw water outlet 4 is returned to a pipe between the supply pump 14 and the circulation pump 15 to be circulated and used. After the raw water side space 6 is filled up with the raw water, the concentrate valve 21 is throttled and the filtrate valve 22 is opened in a state where the supply pump 14 is operated, whereby the raw water is pressurized, and the raw water permeates through the hollow fiber membrane and moves to the filtrate side space 7. Thereafter, the raw water passes through the inside of the hollow fiber membrane and is led out from the filtrate outlet 3 through an open end surface of the second potting portion 9. The led out filtrate is sent to the filtrate tank 13.

In the cross-flow filtration operation, since the flow in the raw water side space 6 is fast, the pressure loss in the raw water side space 6 becomes very large. Although a pressure loss similarly occurs inside the hollow fiber membrane, since the pressure loss on the raw water side is generally large, the difference in transmembrane pressure in the axial direction of the hollow fiber membrane is large compared to that in the dead-end filtration operation. Since the pressure loss on the raw water side is large, a reverse phenomenon occurs in which the pressure of the filtrate becomes relatively higher than the pressure of the raw water on the filtrate outlet 3 side of the hollow fiber membrane 5, which causes a problem that the filtered liquid flows backward. In order to compensate for the amount of the filtrate that has flowed backward, an excessive amount of the liquid is filtered on the raw water inlet 2 side of the hollow fiber membrane 5, which is a factor for promoting membrane fouling.

As a result of intensive studies on this problem, the present inventors have found that, by controlling the pure water permeability K of the hollow fiber membrane 5 housed in the container 1 and the inner diameter $D_i$ of the hollow fiber membrane 5 within predetermined ranges, the difference in transmembrane pressure in the axial direction of the hollow fiber membrane can be reduced while preventing the reverse of the transmembrane pressure on the filtrate outlet 3 side during the cross-flow filtration operation, and have completed the invention of the hollow fiber membrane module.

The pure water permeability K ($m^3/m^2/hr/50$ kPa) of the hollow fiber membrane used in the present invention is in a range of $2.0 \leq K \leq 20.0$, that is, $2.0$ $m^3/m^2/hr/50$ kPa or more and $20.0$ $m^3/m^2/hr/50$ kPa or less. When the pure water permeability K is less than $2.0$ $m^3/m^2/hr/50$ kPa (hereinafter, referred to as m/hr), the filterability of a target raw water may decrease. On the other hand, when the pure water permeability K is higher than $20.0$ m/hr, the pore diameter of the membrane becomes large, so that the blocking rate of a component to be removed deteriorates, and the performance as a membrane may not be exhibited. The pure water permeability K is preferably $2.5$ m/hr to $15.0$ m/hr, and more preferably $3.0$ m/hr to $10.0$ m/hr.

In such a hollow fiber membrane module, it has been found that, by setting the inner diameter $D_i$ ($\mu$m) of the hollow fiber membrane to $350 \leq D_i \leq 600$, that is, in a range of $350$ $\mu$m or more and $600$ $\mu$m or less, a difference between the pressure loss on the raw water side and the pressure loss on the filtrate side during the cross-flow filtration operation can be reduced, the backflow on the filtrate outlet side can be prevented, and the progress of fouling can be reduced. When the inner diameter $D_i$ is set to be larger than $600$ $\mu$m, the transmembrane pressure of the hollow fiber membrane 5 on the raw water inlet 2 side increases, and the progress of fouling may be accelerated. When the inner diameter $D_i$ is smaller than $350$ $\mu$m, the pressure loss in the hollow portion may be increased, and thus the transmembrane pressure on the filtrate outlet 3 side of the hollow fiber membrane 5 is increased in contrast to the case where the inner diameter is large. As a result, the difference in transmembrane pressure in the axial direction of the hollow fiber membrane 5 is increased, and the progress of fouling is accelerated. The inner diameter of the hollow fiber membrane is more preferably $400$ $\mu$m or more and $550$ $\mu$m or less. By controlling the inner diameter within this range, the difference in transmembrane pressure in the axial direction of the hollow fiber membrane can be reduced while preventing the backflow of the filtrate, and fouling is effectively reduced.

Measurement methods of the pure water permeability K and the inner diameter $D_i$ of the hollow fiber membrane will be described below.

The pure water permeability K is measured by preparing a miniature module including three hollow fiber membranes and having a length of $0.1$ m in the axial direction of the hollow fiber membranes. Under conditions of a temperature of 25°C and a filtration differential pressure of $18.6$ kPa, outside-in dead-end filtration of reverse osmosis membrane filtered water is performed for 10 minutes to determine a permeation amount ($m^3$). The permeation amount ($m^3$) is converted into a value per unit time (h) and effective membrane area ($m^2$) based on the following formula (1), and is further multiplied by ($50/18.6$) to be converted into a value at a pressure of 50 kPa, thereby obtaining the pure water permeability K. The effective membrane area in the present invention is an area of a portion, which is used for filtration, of the outer surface of the hollow fiber membrane 5.

$$K = \text{permeation amount } (m^3)/\text{filtration time (hr)}/\text{effective membrane area } (m^2) \times$$

$$(50/18.6) \cdots (1)$$

The inner diameter $D_i$ ($\mu$m) of the hollow fiber membrane is obtained by cutting the hollow fiber membrane along a plane perpendicular to the axial direction with a single-edged blade or the like, observing a cross section by a method such as using a microscope, and measuring a diameter of an inner circle. When the inner circle is flat, a length (major axis) of a portion having a longest diameter and a length (minor axis) of a portion having a shortest diameter in the inner circle may be measured, and both lengths may be averaged to obtain the inner diameter $D_i$. Preferably, any of the plurality of hollow fiber membranes 5 housed in the container 1 is cut out, and a value obtained by averaging inner diameters of 10 or more hollow fiber membranes is used.

The pure water permeability K is preferably measured with a hollow fiber membrane before use, but in a case of a hollow fiber membrane clogged due to use, the pure water permeability K may be measured with a membrane recovered to an initial ratio of 90% or more by chemical cleaning or the like.

Next, in the hollow fiber membrane module for cross-flow filtration of the present invention, the axial length L (m) of the hollow fiber membrane 5 is preferably in a range of $0.5 \leq L \leq 2.0$, that is, 0.5 m or more and 2.0 m or less. When the axial length L of the hollow fiber membrane 5 is less than 0.5 m, the membrane area per hollow fiber membrane module is reduced, and the number of hollow fiber membrane modules introduced into the filtration unit is increased, and thus equipment cost and operation power may be increased. On the other hand, when the axial length L of the hollow fiber membrane 5 exceeds 2.0 m, the pressure losses on the raw water side and the filtrate side increases, and thus the difference in transmembrane pressure in the axial direction of the hollow fiber membrane may further increase. The axial length L of the hollow fiber membrane 5 is preferably 0.7 m to 1.5 m, and more preferably 0.8 m to 1.2 m.

The axial length L is a length in a direction parallel to the container 1 of a portion actually used for filtration in a state where the hollow fiber membrane 5 is housed in the container 1, that is, a portion where the outer surface of the hollow fiber membrane 5 is in contact with the raw water. In FIG. 1, the axial length L is a length of the hollow fiber membrane 5 from an end surface of the first potting portion 8 on a second potting portion side to an end surface of the second potting portion 9 on a first potting portion side. Lengths of the hollow fiber membrane embedded in the first potting portion 8 and the second potting portion 9 are not considered here.

In a case of a hollow fiber membrane module in which the hollow fiber membrane 5 is housed therein in a so-called U shape and both end portions of the hollow fiber membrane 5 are embedded only in the second potting portion 9 in a state of being open, the axial length L is half the length of the hollow fiber membrane actually used for filtration, that is, half a length of a fiber in a portion where the outer surface of the hollow fiber membrane is in contact with the raw water.

In a case where the first potting portion 8 is not provided and the end portion of the hollow fiber membrane 5 on the raw water inlet side is a free end, the axial length L is a length from a portion of the free end which is not sealed with an adhesive or by heat to the end surface of the second potting portion 9 on the raw water inlet side.

In addition, even in a case where the hollow fiber membrane 5 is crimped or twisted, the axial length L may be measured as a length in the direction parallel to the container 1 of the portion of the hollow fiber membrane that is actually used for filtration, that is, the portion where the outer surface of the hollow fiber membrane is in contact with the raw water. As described above, the present application is a technique in which a difference between the pressure loss in the filtrate side and the pressure loss on the raw water side is averaged by controlling the inner diameter $D_i$, the axial length L, and the pure water permeability K of the hollow fiber membrane 5 to be within predetermined ranges, and the difference in transmembrane pressure in the axial direction of the hollow fiber membrane 5 is reduced. In the inside-out hollow fiber membrane module, since the space in contact with the outer surface of the hollow fiber membrane is on the filtrate side, the effect is not exhibited in the configuration of the present application. Therefore, the present application is a technique applied to an outside-in hollow fiber membrane module.

Next, in the hollow fiber membrane module for cross-flow filtration of the present invention, it is preferable that the outer diameter $D_o$ ($\mu$m), the filling rate M (%), and the inner diameter $D_i$ ($\mu$m) of the hollow fiber membrane satisfy a relation of the following expression (2):

$$0.33 \times D_o - 10 \times M + 420 \leq D_i \leq 0.33 \times D_o - 10 \times M + 550 \cdots (2).$$

In a hollow fiber membrane module in which the filling rate M of the hollow fiber membranes is the same, the smaller the outer diameter $D_o$ of the hollow fiber membranes is, the larger the membrane area with which the raw water comes into contact becomes, and thus the pressure loss occurred in the stream of cross flow increases. The present inventors have found that a pressure difference on the raw water side in the axial direction of the hollow fiber membrane 5 increases as the pressure loss increases, but by decreasing the inner diameter $D_i$ of the hollow fiber membrane, the liquid flow resistance of the hollow fiber membrane 5 on the filtrate side is increased, and thus the difference in transmembrane pressure between the raw water side and the filtrate side can be reduced.

In addition, when the hollow fiber membranes 5 having the same outer diameter $D_o$ are used, the membrane area with which the raw water comes into contact increases as the filling rate M increases, and thus the pressure loss occurred in the stream of cross flow increases. It has been found that a pressure difference on the raw water side in the axial direction of the hollow fiber membrane 5 increases as the pressure loss increases, but by decreasing the inner diameter $D_i$ of the hollow fiber membrane, the liquid flow resistance of the hollow fiber membrane 5 on the filtrate side is increased, and thus the difference in transmembrane pressure between the raw water side and the filtrate side can be reduced.

In this way, it is important to design the inner diameter $D_i$ of the hollow fiber membrane so as to fall within an appropriate range in accordance with the outer diameter $D_o$ and the filling rate M. In the present invention, it has been found that, under conditions of a general cross-flow filtration operation, a difference between the liquid flow resistance inside the hollow fiber membrane 5 and the liquid flow resistance on the raw water side can be reduced, and the difference in transmembrane pressure in the axial direction of the hollow fiber membrane 5 can be reduced while preventing the backflow. The expression "under conditions of a general cross-flow filtration" refers to that the operation is performed under conditions of a filtration flux J (m/d) of 0.5 m/d to 2.0 m/d and a cross-flow velocity v (m/s) of 0.5 m/s to 2.0 m/s. However, since appropriate operation conditions are changed depending on the viscosity of the raw water, the conditions are not limited thereto.

The filling rate M (%) is a ratio of a cross-sectional area $S_1$ of the container 1 when a central portion of the container 1 is cut along a plane perpendicular to the axial direction and an occupied area $S_2$ of the hollow fiber membrane 5, and is calculated by the following formula (3).
[Math. 1]

$$M = \frac{S_2}{S_1} \times 100 \quad \cdot \cdot \cdot (3)$$

In a case where a member other than the container 1 and the hollow fiber membrane 5 is present when the central portion of the container 1 is cut along the plane perpendicular to the axial direction, the cross-sectional area $S_1$ of the container 1 is calculated by subtracting a cross-sectional area of the member. That is, when the cross-sectional area of the member is $S_1'$, the filling rate M is calculated by the following formula (4).
[Math. 2]

$$M = \frac{S_2}{S_1 - S_1'} \times 100 \quad \cdot \cdot \cdot (4)$$

The filling rate M (%) is preferably in a range of $25 \leq M \leq 45$, that is, 25% or more and 45% or less. By controlling the filling rate M to 25% to 45%, the liquid flow resistance on the raw water side can be reduced while ensuring the membrane area per module. The filling rate M is preferably 28% to 42%, and more preferably 30% to 40%.

A measurement method of the outer diameter $D_o$ of the hollow fiber membrane is the same as the measurement method of the inner diameter $D_i$, and the outer diameter $D_o$ is obtained by cutting the hollow fiber membrane along the plane perpendicular to the axial direction with a single-edged blade or the like, observing a cross section by a method such as using a microscope, and measuring a diameter of an outer circle. The outer diameter $D_o$ ($\mu$m) is preferably in a range of $850 \leq D_o \leq 1,500$, that is, 850 $\mu$m or more and 1,500 $\mu$m or less. By controlling the outer diameter $D_o$ to 850 $\mu$m to 1,500 $\mu$m, the pressure loss on the raw water side can be reduced while ensuring the membrane area per module, which is preferable.

Examples of the polymer used as the material of the hollow fiber membrane 5 include: olefin polymers such as polyethylene, an ethylene-propylene copolymer, an ethylene-ethyl acrylate copolymer, an ethylene-vinyl acetate copolymer, an ionomer, polypropylene, and poly-4-methylpentene-1; fluorine-containing polymers such as polytetrafluoroethylene, polychlorotrifluoroethylene, polyvinylidene fluoride, a tetrafluoroethylene-ethylene copolymer, and a tetrafluoroethylene-perfluoroalkyl vinyl ether copolymer; cellulose polymers such as cellulose acetate; polyvinyl chloride; acrylonitrile polymers; silicone polymers; polyamide; polyimide; polyethersulfone; polysulfone; polyphenylene oxide; polyphenylene sulfide; polyarylate; polyether ether ketone; polyetherimide; polycarbonate; and polyvinyl alcohol polymers. In order to enhance the heat resistance, physical strength, and chemical durability of the obtained hollow fiber membrane, a fluororesin-based polymer, polyethersulfone, or polysulfone is preferable, but in a hollow fiber membrane module for cross-flow filtration in which a load applied to the membrane is large, a fluororesin-based polymer having excellent strength is preferable.

In the cross-flow filtration, a high turbidity raw water is often handled, and when the pore diameter is small, clogging of the membrane progresses quickly, and therefore, a fractionated particle diameter φ of the hollow fiber membrane is preferably 0.1 μm or more. The fractionated particle diameter φ is more preferably 0.3 μm or more, and still more preferably 0.5 μm or more. On the other hand, when the fractionated particle diameter φ exceeds 2.0 μm, the removal rate of a component to be blocked may decrease, and thus the fractionated particle diameter φ is preferably 2.0 μm or less, and more preferably 1.5 μm or less.

The fractionated particle diameter φ can be measured by the following method. A miniature module similar to the miniature module used for measuring the pure water permeability K is prepared. Then, particles having a uniform size, such as polystyrene latex particles, are dispersed at a predetermined concentration to prepare a raw water, and particle concentrations are measured for the raw water and a filtrate when the raw water is filtered by the miniature module. The particle concentrations are measured using polystyrene latex particles having various particle diameters, and a particle diameter at which the removal rate of the particles is 90% is defined as the fractionated particle diameter φ.

The filtration in this case is preferably performed by cross-flow filtration in order to prevent membrane clogging due to particles, and is preferably performed in ranges of a filtration flux of 0.5 m/d to 5 m/d and a cross-flow velocity of 0.5 m/s to 5 m/s.

Hereinafter, a method for manufacturing the hollow fiber membrane module according to the present invention will be described.

(Method for Manufacturing Hollow Fiber Membrane)

As an example of the method for manufacturing the hollow fiber membrane according to the present invention, a method for manufacturing a hollow fiber membrane using a fluororesin-based polymer will be described. As a method for manufacturing the hollow fiber membrane using the fluororesin-based polymer, various manufacturing methods such as thermally induced phase separation and nonsolvent induced phase separation can be used. Hereinafter, a manufacturing method using the thermally induced phase separation will be described.

The fluororesin-based polymer is dissolved in a poor solvent or a good solvent of the fluororesin-based polymer at a relatively high temperature equal to or higher than a crystallization temperature to prepare a fluororesin-based polymer solution (that is, a membrane-forming raw liquid containing the fluororesin-based polymer).

When a concentration of the polymer in the membrane-forming raw liquid is high, a porous hollow fiber membrane having high strength can be obtained. On the other hand, when the concentration of the polymer is low, the porosity of the porous hollow fiber membrane is increased, and the pure water permeability K is improved. Therefore, the concentration of the fluororesin-based polymer is preferably 20 weight% or more and 60 weight% or less, and more preferably 30 weight% or more and 50 weight% or less.

In the present description, the poor solvent is a solvent that cannot dissolve 5 weight% or more of the fluororesin-based polymer at a low temperature of 60°C or lower, but can dissolve 5 weight% or more of the fluororesin-based polymer in a high temperature region of 60°C or higher and the melting point of the fluororesin-based polymer or lower (for example, about 178°C when the polymer consists of a vinylidene fluoride homopolymer alone). The good solvent is a solvent capable of dissolving 5 weight% or more of the fluororesin-based polymer even in a low temperature region of less than 60°C, and a nonsolvent is defined as a solvent that does not dissolve or swell the fluororesin-based polymer up to the melting point of the fluororesin-based polymer or the boiling point of the solvent.

Examples of the poor solvent for the fluororesin-based polymer include cyclohexanone, isophorone, γ-butyrolactone, methyl isoamyl ketone, propylene carbonate, dimethyl sulfoxide, and mixed solvents thereof. Examples of the good solvent include N-methyl-2-pyrrolidone, dimethylacetamide, dimethylformamide, methyl ethyl ketone, acetone, tetrahydrofuran, tetramethylurea, trimethyl phosphate, and mixed solvents thereof. Examples of the nonsolvent include: water; aliphatic hydrocarbons such as hexane, pentane, benzene, toluene, methanol, ethanol, carbon tetrachloride, o-dichlorobenzene, trichloroethylene, ethylene glycol, diethylene glycol, triethylene glycol, propylene glycol, butylene glycol, pentanediol, hexanediol, and low molecular weight polyethylene glycol; aromatic hydrocarbons; aliphatic polyhydric alcohols; aromatic polyhydric alcohols; chlorinated hydrocarbons; other chlorinated organic liquids; and mixed solvents thereof.

In a step of forming a hollow fiber, the hollow fiber is obtained from a membrane-forming raw liquid containing a fluororesin-based polymer by using the thermally induced phase separation in which phase separation is induced by a temperature change. In the thermally induced phase separation, two types of phase separation mechanisms are mainly used. One is a liquid-liquid phase separation method in which a polymer solution uniformly dissolved at a high temperature is separated into a polymer dense phase and a polymer dilute phase due to a decrease in the dissolving ability of the solution at the time of cooling, and then a structure is fixed by crystallization. The other is a solid-liquid phase separation method in which a polymer solution uniformly dissolved at a high temperature undergoes crystallization of the polymer at the time of cooling, and is phase-separated into a polymer solid phase and a solvent phase.

In the former method, a three-dimensional network structure is mainly formed, and in the latter method, a spherical structure consisting of spherical tissues is mainly formed. The manufacture of the hollow fiber membrane of the present invention is not particularly specified, but the latter phase separation mechanism is preferably used for a hollow fiber membrane for cross-flow filtration in which strength is required. Therefore, a polymer concentration and a solvent that induce solid-liquid phase separation are selected.

As a specific method, a hollow portion forming liquid is discharged from a pipe on an inner side of a double pipe type spinneret for porous hollow fiber membrane-spinning while the above-described membrane-forming raw liquid is discharged from a pipe on an outer side of the double pipe type spinneret. The membrane-forming raw liquid discharged in this manner is cooled and solidified in a cooling bath to obtain a porous hollow fiber membrane.

Next, the cooling bath for cooling the fluororesin-based polymer solution discharged from the spinneret will be described. For the cooling bath, it is preferable to use a mixed liquid containing a poor solvent or a good solvent having a concentration of 50 weight% to 95 weight% and a nonsolvent having a concentration of 5 weight% to 50 weight%. Further, as the poor solvent, it is preferable to use the same poor solvent as in the polymer solution. In addition, for the hollow portion forming liquid, similar to the cooling bath, it is preferable to use a mixed liquid containing a poor solvent or a good solvent having a concentration of 50 weight% to 95 weight% and a nonsolvent having a concentration of 5 weight% to 50 weight%. Further, as the poor solvent, it is preferable to use the same poor solvent as in the polymer solution. The hollow fiber membrane made of the fluororesin-based polymer obtained by the above method may be stretched. The stretching ratio and the stretching temperature are appropriately selected depending on desired pore diameters, dimensions, and pure water permeability.

In the case of obtaining the hollow fiber membrane to be housed in the hollow fiber membrane module of the present invention, the inner and outer diameters of the hollow fiber membrane can be controlled mainly by adjusting a spinneret diameter of the double pipe type spinneret or discharge amounts of the membrane-forming raw liquid and the hollow portion forming liquid. That is, a hollow fiber membrane having large inner and outer diameters can be obtained by using a double pipe type spinneret having a large diameter, or by increasing the discharge amounts of the membrane-forming raw liquid and the hollow portion forming liquid. The dimensions can also be adjusted by changing the stretching ratio and the stretching temperature.

The pure water permeability K is mainly related to the pore diameter and the thickness of the obtained membrane. The pore diameter can be controlled by adjusting solidification conditions and stretching conditions, and for example, the pore diameter increases when the temperature of a raw material liquid in a gear pump is increased or the polymer concentration of the raw material liquid is decreased. As described above, the thickness can be controlled by adjusting the spinneret diameter of the double pipe type spinneret and the discharge amounts of the membrane-forming raw liquid and the hollow portion forming liquid, and for example, the thickness is reduced by reducing the discharge amount of the membrane-forming raw liquid. By controlling membrane formation conditions to be appropriate as described above, it is possible to keep the pure water permeability K within the range of the present invention.

In addition, as another embodiment of the hollow fiber membrane module of the present invention, it is preferable that a ratio $D_t/D_i$ of a membrane thickness $D_t$ ($\mu$m) to the inner diameter $D_i$ ($\mu$m) of the hollow fiber membrane is in a range of $0.40 \leq D_t/D_i \leq 0.65$, that is, in a range of 0.40 or more and 0.65 or less.

Here, the membrane thickness $D_t$ ($\mu$m) is calculated based on the outer diameter $D_o$ ($\mu$m) and the inner diameter $D_i$ ($\mu$m) of the hollow fiber membrane by the following formula (5):

$$D_t = (D_o - D_i)/2 \cdots (5).$$

That is, in a case where the membrane thickness $D_t$ is small with respect to the inner diameter $D_i$, when the filling rate is increased in order to increase the membrane area, the pressure loss on the raw water side increases, so that the membrane area cannot be sufficiently ensured. On the other hand, when the membrane thickness $D_t$ is large with respect to the inner diameter $D_i$, the increase in the membrane area is small even when the filling rate is increased. When the membrane thickness $D_t$ is within a range of 0.40 or more and 0.65 or less with respect to the inner diameter $D_i$, it is possible to prevent an increase in the pressure loss on the raw water side and reduce the difference in transmembrane pressure in the axial direction of the hollow fiber membrane while ensuring a sufficient membrane area. The ratio $D_t/D_i$ is more preferably 0.43 to 0.62, and still more preferably 0.45 to 0.60.

Next, the strength of the hollow fiber membrane 5 used in the present invention is preferably 250 gf/fiber or more. In an outside-in cross-flow filtration, as illustrated in FIG. 1 as an example, the raw water is introduced into the hollow fiber membrane module 1 from the raw water inlet 2 of the hollow fiber membrane module 1 and then is led out from the raw water outlet 4, but the flow of the raw water is turned by 90° when the raw water is led out from the raw water outlet 4. Therefore, a shearing force perpendicular to the longitudinal direction of the hollow fiber membrane 5 is applied to the hollow fiber membrane 5 in the vicinity of the raw water outlet 4.

In the present invention, it has been found that when the strength of the hollow fiber membrane 5 is 250 gf/fiber or more, fiber breakage, membrane damage, and the like can be prevented against shearing caused by a cross-flow flow rate assumed in the present application.

The strength is a load (gf) applied when the hollow fiber membrane 5 is stretched in the axial direction by a tensile tester or the like and is broken. The strength of the hollow fiber membrane 5 is preferably 400 gf/fiber or more, and more preferably 600 gf/fiber or more.

A measurement method of the strength is not particularly limited, but the strength can be measured by, for example, using a tensile tester, performing a tensile test on a sample having a measurement length of 50 mm at a tensile rate of 50 mm/min five times or more with changing the sample, and determining an average value of breaking strengths and an average value of breaking elongations.

(Preparation of Hollow Fiber Membrane Module)

Types of the hollow fiber membrane module are classified into a container-integrated module in which the container 1 and the hollow fiber membrane 5 are fixed by an adhesive, and a cartridge-type module in which the container 1 and the hollow fiber membrane 5 are not fixed by an adhesive and the hollow fiber membrane 5 can be attached to and detached from the container 1.

In the container-integrated module, a plurality of hollow fiber membranes 5 are inserted into the container 1, and the container 1 and end portions of the hollow fiber membranes 5 are fixed by an adhesive. In the cartridge-type module, the hollow fiber membranes are inserted into a dedicated jig or the like and the membranes are bonded to each other with an adhesive, and the hollow fiber membranes are not fixed to the container 1.

In either method, the hollow fiber membranes 5 are inserted into a fixing jig or a container, or both the fixing jig and the container, and an adhesive is poured to fix the hollow fiber membranes 5. Examples of a method for filling a gap between the hollow fiber membranes with an adhesive include a centrifugal potting method in which the potting agent is caused to permeate by utilizing a centrifugal force, and a static potting method in which the adhesive is caused to permeate by natural flow. Alternatively, the adhesive may be injected into a casting mold to fill the gap between the hollow fiber membranes.

In a case where an end portion of the hollow fiber membrane fixed with the adhesive is to be opened, the end portion of the hollow fiber membrane 5 is sealed in advance such that the adhesive does not flow into the hollow portion of the hollow fiber membrane when the adhesive is poured, and the end portion is fixed with the adhesive. Examples of a sealing method include a method of injecting an adhesive only into the hollow portion, and welding with heat or a solvent. After the hollow fiber membrane 5 whose end portion is sealed is fixed with the adhesive, the other end side of the hollow fiber membrane 5 with respect to the sealed portion can be cut in a cross-sectional direction of the hollow fiber membrane 5 to open the end portion. If the end portion of the hollow fiber membrane is fixed by the adhesive without being sealed, the adhesive flows into the hollow portion of the hollow fiber membrane 5, so that the end portion is sealed.

In the present invention, a method for fixing both end portions of the hollow fiber membrane 5 with an adhesive may be adopted, but the end portion of the hollow fiber membrane 5 on the raw water inlet side may be a free end that is not fixed with the adhesive.

In the case of the hollow fiber membrane module for cross-flow filtration of the present invention, as for the raw water inlet 2 connected to the container 1, a ratio $S_f/S_p$ of a cross-sectional area $S_f$ of the raw water inlet 2 to a flow path area $S_p$ in the container 1 is preferably 0.35 or more.

The cross-sectional area $S_f$ of the raw water inlet 2 is an area of a flow path portion when the raw water inlet 2 is cut along a plane perpendicular to a flow of the raw water, and is an area of an inner circle when the shape of the raw water inlet 2 is a circle.

The flow path area $S_p$ in the container 1 is an area obtained by subtracting the occupied area $S_2$ of the hollow fiber membrane 5 from the cross-sectional area $S_1$ of the container 1 when the central portion of the container 1 is cut along a plane perpendicular to the axial direction. The central portion of the container 1 is a central portion of the first potting portion 8 and the second potting portion 9 in the axial direction of the container 1.

The cross-sectional area $S_1$ of the container 1 is a cross-sectional area of a space portion when the container 1 is cut along a cross section perpendicular to the axial direction of the hollow fiber membrane 5. When the container 1 has a cylindrical shape, the shape of the cross section is a circle, and thus the cross-sectional area of the inner circle is the cross-sectional area of the container 1.

The occupied area $S_2$ of the hollow fiber membrane 5 is, assuming that the shape of the cross section of the hollow fiber membrane 5 is a perfect circle, a value obtained by multiplying an area of the circle calculated based on the outer diameter $D_o$ by the number N of hollow fiber membranes housed in the container 1. When the hollow fiber membrane is housed therein in a U shape, the number of hollow fiber membranes is calculated as twice.

In the cross-flow filtration, since an amount of the raw water flowing in the container 1 is larger than that in the dead-end filtration, the ratio $S_f/S_p$ is preferably 0.35 or more. When the ratio $S_f/S_p$ is 0.35 or more, the pressure loss occurred at the raw water inlet 2 is reduced, and thus the pump power can be reduced. When the ratio $S_f/S_p$ is preferably

set to 0.5 or more, and more preferably set to 0.7 or more, the occurred pressure loss can be reduced.

As for a cross-sectional area $S_c$ of the raw water outlet 4, a ratio $S_c/S_p$ of the cross-sectional area $S_c$ of the raw water outlet 4 to the flow path area $S_p$ in the container 1 is preferably 0.35 or more. The cross-sectional area $S_c$ of the raw water outlet 4 is an area of a flow path portion when the raw water outlet 4 is cut along a plane perpendicular to a flow of the raw water, and is an area of an inner circle when the shape of the raw water outlet 4 is a circle. When the ratio $S_c/S_p$ is 0.35 or more, the pressure loss occurred at the raw water outlet 4 is reduced, and thus the pump power can be reduced. The ratio $S_c/S_p$ is preferably 0.5 or more, and more preferably 0.7 or more.

In addition, when the inner diameter of the container 1 is small, a length of a boundary surface with which the raw water comes into contact with respect to the flow path area $S_p$ is increased, and thus the frictional resistance is increased, and the pressure loss on the raw water side is increased. From the viewpoint of preventing the pressure loss on the raw water side, the inner diameter of the container 1 is preferably 50 mm or more, more preferably 80 mm or more, and still more preferably 100 mm or more.

(Operation Method of Hollow Fiber Membrane Module)

Next, an operation method of a hollow fiber membrane module of the present invention will be described in detail with reference to FIG. 3 and FIG. 4.

In the cross-flow filtration operation, as illustrated in FIG. 3, the raw water is sent from the raw water tank 12 to the container 1 by the supply pump 14, and the raw water side space 6 (see FIG. 1) is filled up with the raw water. The raw water led out from the raw water outlet 4 is returned to the raw water tank 12 and circulated. By setting the filtrate valve 22 to be open in this state, the raw water is filtered and sent to the filtrate tank 13.

The filtration flow rate is adjusted by controlling the filtrate valve 22 such that the filtrate flowmeter 32 reaches a predetermined flow rate. The circulation flow rate is adjusted by controlling a rotation speed of the supply pump 14 such that the concentrate flowmeter 31 reaches a predetermined flow rate.

On the other hand, in the filtration unit illustrated in FIG. 4, an operation method is performed in which the raw water is supplied by the supply pump 14 and the circulation pump 15, and a part or all of the concentrate is returned between the supply pump 14 and the circulation pump 15 to be circulated. The filtration flow rate is controlled by the supply pump 14 such that the filtrate flowmeter 32 reaches a predetermined value, and the circulation flow rate is controlled by the circulation pump 15 such that the concentrate flowmeter 31 reaches a predetermined value.

At this time, a circulation flow rate V (m³/hr) and a filtration flow rate Q (m³/hr) are determined based on set values of the cross-flow velocity v (m/s) and the filtration flux J (m/d) shown below.

The cross-flow velocity v is a value obtained by dividing the circulation flow rate by the flow path area $S_p$ in the container 1, and is calculated by the following formula (6).

[Math. 3]

$$v = \frac{V}{3600 S_p} \quad \cdot \cdot \cdot (6)$$

The filtration flux J is a value obtained by dividing the filtration flow rate Q by an effective membrane area A (m²) of the hollow fiber membrane 5, and is calculated by the following formulae (7) and (8). Here, $D_o$ is the outer diameter (μm) of the hollow fiber membrane, L is the axial length (m) of the hollow fiber membrane, and N is the number of the hollow fiber membranes 5 inserted into the hollow fiber membrane module.

[Math. 4]

$$J = \frac{Q \times 24}{A} \quad \cdot \cdot \cdot (7)$$

$$A = \pi \left(\frac{D_o}{1000000}\right) LN \quad \cdot \cdot \cdot (8)$$

In the hollow fiber membrane module for cross-flow filtration of the present invention, the cross-flow filtration is performed such that the filtration flux J (m/d) and the cross-flow velocity v (m/s) satisfy the following requirements:

$$0.5 \leq J \leq 2.0$$

$$1.0 \leq v \leq 1.8.$$

By controlling the filtration flux J in a range of 0.5 m/d to 2.0 m/d, it is possible to perform an operation in which the progress of fouling is prevented while ensuring a desired filtration flow rate. In addition, by controlling the cross-flow velocity v to 1.0 m/s to 1.8 m/s, it is possible to reduce the difference in transmembrane pressure in the axial direction of the hollow fiber membrane 5 by preventing the pressure loss on the raw water side while giving a sufficient shearing force for washing out accumulated suspended solid on the surface of the membrane. The filtration flux J is preferably 0.8 m/d to 1.8 m/d, and more preferably 1.0 m/d to 1.5 m/d. The cross-flow velocity v is preferably 1.2 m/s to 1.7 m/s, and more preferably 1.4 m/s to 1.6 m/s.

(Pressure Distribution Simulation of Hollow Fiber Membrane Module)

In order to verify these effects, a range that cannot be examined with experiments was examined by simulating the pressure distribution in the hollow fiber membrane module.

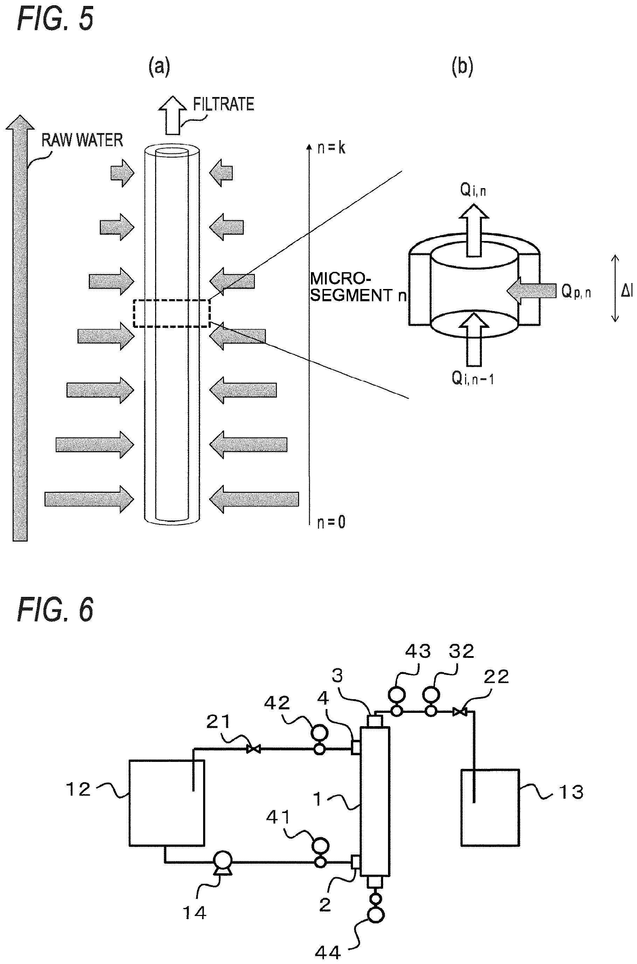

FIG. 5 illustrates an outline of a model for simulation. (a) of FIG. 5 illustrates one hollow fiber membrane 5, a flow of a raw water, and a flow of a filtrate. In FIG. 5, the raw water is indicated by shaded arrows, and the filtrate is indicated by outlined arrows. The end portion of the hollow fiber membrane 5 on the raw water inlet side is defined as n = 0, and the position of the end portion on the filtrate outlet side is defined as n = k. The end portion of the hollow fiber membrane 5 on the raw water inlet side is sealed, and the end portion of the hollow fiber membrane 5 on the filtrate outlet side is opened, so that all the filtrate is led out from the end portion on the filtrate outlet side. (b) of FIG. 5 illustrates a flow of a liquid in a micro-segment n when the hollow fiber membrane 5 is meshed by $\Delta 1$ in the axial direction. n is an integer of 0 or more, and k is a natural number of 1 or more. In the micro-segment n, a filtrate led out from a micro-segment n-1 and a filtrate filtered by the membrane in the micro-segment n merge. As a result, a flow rate $Q_{i,n}$ of the filtrate led out from the micro-segment n is obtained by the following formula (9), when an amount of the filtrate led out from the micro-segment n-1 is set as $Q_{i,n-1}$ and an amount of the filtrate filtered by the membrane in the micro-segment n is set as $Q_{p,n}$. Incidentally, $Q_{i,-1}$ does not exist, and $Q_{i,0} = Q_{p,0}$. k is preferably 50 or more, and more preferably 100 or more. In addition, a membrane length from the end portion on the raw water inlet side to the micro-segment n is defined as $I_n$. $I_0 = 0$, and $I_k = L$.

[Math. 5]

$$Q_{i,n} = Q_{i,n-1} + Q_{p,n} \quad \cdots \quad (9)$$

The flow rate $Q_{p,n}$ of the filtrate in the micro-segment n is calculated by the following formulae (10) to (12) based on a raw water side pressure $P_{o,n}$ and a filtrate side pressure $P_{i,n}$ in the micro-segment n, a membrane area $A_n$, a membrane filtration resistance $R_n$, and a raw water viscosity $\mu$ at a filtration temperature. $R_n$ is calculated based on the filtration flux J (= permeation amount ($m^3$)/filtration time (hr)/effective membrane area ($m^2$)), a transmembrane pressure difference $\Delta P_m$, and the viscosity $\mu$ when the pure water permeability K is measured by a miniature module, and it is assumed that $R_n$ is uniform in the axial direction of the hollow fiber membrane 5 at the beginning of filtration.

[Math. 6]

$$Q_{p,n} = \frac{(P_{o,n} - P_{i,n})A_n}{\mu R_n} \quad \cdots \quad (10)$$

$$A_n = \pi D_0 \Delta l \quad \cdots \quad (11)$$

$$R_n = \frac{\Delta P_m}{\mu J} \quad \cdots \quad (12)$$

A raw water side pressure $P_{o,n}$ in the micro-segment n is calculated by the following formula (13) in consideration of a raw water introduction pressure $P_{o,0}$ and a pressure loss $\Delta P_0 \times I_n$ caused by the stream of cross flow. Actually, since a part of the raw water is filtered by the membrane, the circulation flow rate changes in the axial direction of the hollow fiber membrane 5, but the change can be ignored because the flow rate of filtration is smaller than the circulation flow rate. Therefore, in this model, the pressure loss $\Delta P_0$ per unit length in the axial direction caused by the stream of cross flow is regarded as being constant regardless of the position for the calculation.
[Math. 7]

$$P_{o,n} = P_{o,0} - \Delta P_o l_n \quad \cdots (13)$$

As for the pressure loss $\Delta P_o$ per unit length, since a flow path structure on the raw water side is complicated, an equivalent diameter $D_e$ when a raw water side flow path is replaced with a circular pipe is calculated based on the outer diameter $D_o$ of the hollow fiber membrane 5, the number N of the hollow fiber membrane 5, and the like, and the pressure loss $\Delta P_o$ is calculated by the following formulae (14) to (16). Here, $\rho$ is a raw water density, $D_c$ is a diameter of the inner circle of the container 1, and $\tau$ is a shape correction coefficient of the raw water side flow path.
[Math. 8]

$$D_e = \frac{4S_p}{\pi D_0 N + \pi D_c} \quad \cdots (14)$$

$$Re_O = \frac{\rho D_e v}{\mu} \quad \cdots (15)$$

$$\Delta P_O = \tau \frac{32}{Re_O} \frac{1}{D_e} \rho v^2 \quad \cdots (16)$$

The filtrate side pressure $P_{i,n}$ in the micro-segment n is calculated based on the pressure loss when flowing through the inside of the hollow fiber membrane 5. Here, a Reynolds number $Re_{i,n}$ of the filtrate flowing through the inside of the hollow fiber membrane 5 is calculated, and the pressure loss from the micro-segment n to the end portion on the filtrate outlet side is calculated by integration. Here, calculation methods in a case where the flow flowing inside is a laminar flow are shown in the following formulae (17) and (18).
[Math. 9]

$$Re_{i,n} = \frac{Q_{i,n}\rho D_i}{\mu S_{i,n}} \quad \cdots (17)$$

$$P_{i,n} = \int_n^k \frac{32}{Re_{1,n}} \frac{\Delta l}{D_i} \rho \left(\frac{Q_{i,n}}{\pi(D_i/2)^2}\right)^2 + P_{i,k} \quad \cdots (18)$$

Here, for convenience, $P_{i,k} = 0$ is set, and $P_{0,0}$ is adjusted such that a filtrate flow rate $Q_{i,k}$ obtained from the hollow fiber membrane 5 satisfies the following formula (19), whereby the pressure distribution on the raw water side and the filtrate side of the hollow fiber membrane 5 is calculated. It is a set filtration flux.
[Math. 10]

$$\frac{Q_{i,k}}{\pi D_o L} = J_t \quad \cdots (19)$$

Based on the pressure distribution obtained by calculation in this way, a difference between the raw water side pressure $P_{o,n}$ and $P_{i,n}$ in the micro-segment n is the transmembrane pressure difference $\Delta P_{m,n}$ in the section. In the present invention, the structure of the hollow fiber membrane module preferably satisfies $\Delta P_{m,k}>0$ at n = k when the operation is performed under predetermined conditions. When $\Delta P_{m,k}$ is smaller than zero, the filtrate that has once permeated through the hollow fiber membrane 5 flows back to the raw water side, and the efficiency of filtration deteriorates. That is, in order to obtain a certain amount of filtrate, an excessive amount of the raw water is filtered.
More preferably, the dimensions, filling rate, operation conditions, and the like of the hollow fiber membrane module are controlled such that $\Delta P_{m,k}/\Delta P_{m,0}$ is in a range of 0.1 to 5.0. When either $\Delta P_{m,0}$ or $\Delta P_{m,k}$ is high, a load on the end portion of the hollow fiber membrane 5 on the raw water inlet side or the end portion of the hollow fiber membrane 5 on the filtrate outlet side increases, and clogging progresses faster than usual. Particularly preferably, $\Delta P_{m,k}/\Delta P_{m,0}$ is controlled to be within 0.5 to 2.0.

The pressure distribution in the hollow fiber membrane module changes as the filtration is continued, but it is preferable that $\Delta P_{m,k} > 0$ is satisfied at the beginning of the operation. In the design of the hollow fiber membrane module, it is preferable to determine the dimensions and performance of the hollow fiber membrane 5, the number of hollow fiber membranes to be loaded in the hollow fiber membrane module, and the operation conditions such that $\Delta P_{m,k} > 0$ is satisfied at an initial stage of the filtration.

The operation of the hollow fiber membrane module for cross-flow filtration in the present invention can be applied to various types of raw waters, but is particularly suitable for a raw water that needs to be operated at a fast cross-flow velocity.

Such a raw water preferably has a turbidity of 20 NTU or more and a total organic carbon (TOC) concentration of 1,000 mg/L or more. In a case where such a raw water is filtered, when the cross-flow velocity is low, the surface of the hollow fiber membrane is insufficiently cleaned by the stream of cross flow. As a result, the progress of fouling of the hollow fiber membrane is accelerated, and therefore, the operate is required to be performed at a high cross-flow velocity. The turbidity is preferably 50 NTU or more, and more preferably 100 NTU or more. The TOC concentration is preferably 5,000 mg/L or more, and more preferably 10,000 mg /L or more. As for the TOC, since a raw water consisting of a component that permeates through a membrane is preferable as to be described later, an upper limit of the TOC concentration is not particularly limited, and as for the turbidity, since the operability is deteriorated due to accumulation of suspended components in the module, the turbidity is preferably 100,000 NTU or less.

A measurement method of the turbidity is not particularly limited as long as a value is measured in units of a nephelometric turbidity unit (NTU), and the measurement can be performed using various measurement devices. As an example, a device that satisfies requirements described in a clean water test method is used.

As the measurement method of the TOC concentration, a TC-IC method in which calculation is made by subtracting inorganic carbon (IC) from total carbon (TC), or an NPOC method in which the TOC concentration is measured by adding an acid to a sample, aerating the sample, and measuring the total carbon of the aerated liquid can be used. When the raw water contains a large amount of volatile organic carbon, the measurement is preferably performed using the TC-IC method.

Further, when such a raw water is filtered, the turbidity of the filtrate is preferably 10 NTU or less and the TOC concentration is preferably 1,000 mg/L or more. That is, it is preferable to apply the operation method of the present application to a raw water containing not a component which constitutes TOC in the raw water and is blocked by the membrane but a component that permeates through the membrane. The component that permeates through the membrane adheres to and accumulates on the membrane surface or inside the membrane, and causes the clogging of the hollow fiber membrane to proceed, but in a case where an excessive filtration flux flows, the clogging inside the membrane is likely to proceed. By using the hollow fiber membrane module of the present application, the operation can be performed while reducing the difference in transmembrane pressure in the axial direction. Therefore, in particular, an excessive filtration flux can be prevented from flowing to the end portion of the hollow fiber membrane 5 on the raw water inlet side, and thus the progress of clogging can be delayed.

As also for the viscosity of the raw water, the operation method is preferably applied to a raw water having a viscosity of 2 mPa·s or more during the filtration operation. When the viscosity of the raw water is high, the pressure loss on the raw water side also increases in accordance with the viscosity, and thus the difference in transmembrane pressure in the axial direction of the hollow fiber membrane 5 is likely to occur. By using the hollow fiber membrane module of the present application, the operation can be performed while reducing the difference in transmembrane pressure in the axial direction even in a raw water having a high viscosity.

The measurement method of the viscosity is not particularly limited, but it is preferable to measure a shear viscosity of the raw water whose viscosity changes depending on a shear rate during the filtration operation. Specifically, the viscosity at the shear rate during the filtration operation is preferably measured, and the shear viscosity when the temperature and the shear rate during the filtration operation are applied can be measured using a rheometer. The shear rate can be calculated by dividing a value (2v) obtained by doubling the cross-flow velocity v during the filtration operation by a radius (= $D_e/2$) calculated based on the equivalent diameter $D_e$ of the raw water side flow path.

Since values of the turbidity and the viscosity vary depending on the temperature, it is preferable to measure the turbidity and the viscosity at the temperature at the time of actual filtration.

EXAMPLES

Hereinafter, the present invention will be described with reference to specific examples, but the present invention is not limited to these examples. Various parameters relating to the present invention were measured using the above-mentioned method.

First, it was verified how accurately the actual pressure distribution of the hollow fiber membrane module can be predicted by the simulation represented by the above-mentioned formulae (9) to (19).

(Reference Example 1)

For the verification, a miniature module having a length of about 1 m was used. A fluorine tube having an inner diameter of 8 mm was used as the container 1, and hollow fiber membranes having an outer diameter of 1,190 $\mu$m, an inner diameter of 720 $\mu$m, and pure water permeability of 3.2 m/hr were used as the hollow fiber membranes 5, and fifteen hollow fiber membranes were potted in a state where both ends were opened such that the axial length L became 1.1 m. The filling rate M in this case was 32%. As illustrated in FIG. 6, the raw water inlet 2 and the raw water outlet 4 are connected to a side surface of the tube, and a raw water introduced from the raw water inlet 2 flows in the container 1 in a direction parallel to the axial direction of the hollow fiber membrane 5 and is led out from the raw water outlet 4. In this case, a pressure measured by the raw water introduction pressure gauge 41 was defined as the raw water introduction pressure $P_{o,0}$, and a pressure measured by the raw water lead-out pressure gauge 42 was defined as a raw water lead-out pressure $P_{o,k}$.

On the other hand, on the filtrate side, a pressure gauge was connected to each of both ends that are opened, and a pressure measured by the filtrate lead-out pressure gauge 43 provided in the pipe connected to the filtrate tank 13 was defined as a filtrate lead-out pressure $P_{i,k}$, and a pressure measured by the filtrate introduction pressure gauge 44 provided on the other end side was defined as a filtrate introduction pressure $P_{i,0}$.

In the hollow fiber membrane module 10 of the present application, as illustrated in FIG. 1, the end portion of the hollow fiber membrane 5 on the filtrate outlet side is open, and the end portion of the hollow fiber membrane 5 on the raw water inlet side is sealed. Therefore, among values of $P_{i,n}$ shown in the formula (18), the filtrate introduction pressure $P_{i,0}$ at the position of n = 0 cannot be actually measured. Therefore, for the verification of this simulation, a miniature module of which both ends are opened was prepared, and $P_{i,0}$ was measured. Since a space to which the filtrate introduction pressure gauge 44 for measuring $P_{i,0}$ is connected is sealed and the filtrate is not led out to a filtrate introduction pressure gauge 44 side, the pressure distribution of the miniature module and the pressure distribution of the hollow fiber membrane module 10 show the same distribution.

A filtration test was performed using this miniature module. As the raw water, a simulated liquid of a microbial fermentation liquid was used. The viscosity of this simulated liquid of the microbial fermentation liquid was 2.4 mPa·s.

The prepared microbial fermentation liquid was supplied to the miniature module by the supply pump 14, and cross-flow filtration was performed. Operation conditions in this case were a filtration flux of 0.9 m/d and a cross-flow velocity of 1.5 m/s. The filtration was started under the operation conditions, and each pressure immediately after the start of the filtration was measured to calculate $\Delta P_{m,0}$ and $\Delta P_{m,k}$.

Further, $\Delta P_{m,0}$ and $\Delta P_{m,k}$ were calculated based on the simulation using the formulae (9) to (19). In the simulation, various parameters of the hollow fiber membrane 5 used in the preparation of the miniature module were input. The filtrate lead-out pressure $P_{o,k}$ was calculated using a measurement value obtained from a miniature module test. In addition, $\Delta l$ was set to 10 mm, and the shape correction coefficient $\tau$ of the raw water side flow path was set to 1.5.

As a result of comparing a measurement value and a simulation value, as shown in Table 1, $\Delta P_{m,0}$ shows equivalent values although there is a slight difference therebetween, and both values for $\Delta P_{m,k}$ are negative values, and a phenomenon in which reverse filtration occurs could be reproduced.

(Reference Example 2)

$\Delta P_{m,0}$ and $\Delta P_{m,k}$ were measured and compared by the same method as that described in Reference Example 1 except that thirteen hollow fiber membranes 5 having an outer diameter of 760 $\mu$m, an inner diameter of 540 $\mu$m, and a pure water permeability of 10.4 m/hr were used, a fluorine tube having an inner diameter of 6 mm was used as the container 1, and a miniature module was prepared. The filling rate M in this case was 23%. As a result, as shown in Table 1, $\Delta P_{m,0}$ shows equivalent values although there is a slight difference therebetween, and both values for $\Delta P_{m,k}$ are positive values, and a phenomenon in which the reverse filtration can be prevented by reducing the inner diameter could be reproduced.

From Reference Examples 1 and 2, it was confirmed that the simulation was able to reproduce the pressure distribution of the hollow fiber membrane module, and therefore, results of the pressure distribution obtained by the simulation are shown with respect to the difference in transmembrane pressure in the axial direction of the hollow fiber membrane 5 for which data is difficult to be experimentally obtained in the hollow fiber membrane module of an actual machine size.

Table 1

| Performance of hollow fiber membrane module | | | Reference Example 1 | Reference Example 2 |
|---|---|---|---|---|
| Module specification | Axial length L (m) | | 1.1 | 1.1 |
| | Pure water permeability K (m/hr) | | 3.2 | 10.4 |
| | Inner diameter $D_i$ ($\mu$m) | | 720 | 540 |
| | Outer diameter $D_o$ ($\mu$m) | | 1,190 | 760 |
| | Filling rate M (%) | | 32 | 23 |
| Operation condition | Cross-flow velocity (m/s) | | 1.5 | 1.5 |
| | Average filtration flux (m/d) | | 0.9 | 1.5 |
| Pressure | $\Delta P_{m,0}$ | Measurement value | 29 | 13 |
| | | Simulation value | 20 | 7 |
| | $\Delta P_{m,k}$ | Measurement value | -11 | 1 |
| | | Simulation value | -14 | 0 |

(Example 1)

The outside-in hollow fiber membrane module illustrated in FIG. 1 was prepared, and the filterability to the simulated liquid of the microbial fermentation liquid was evaluated.

The hollow fiber membranes used in the hollow fiber membrane module were manufactured by the following method. First, 39 weight% of a vinylidene fluoride homopolymer having a weight average molecular weight of 417,000 (KF1300 manufactured by Kureha Corporation, weight average molecular weight: 417,000, number average molecular weight: 221,000) and 61 weight% of $\gamma$-butyrolactone were dissolved at 150°C to obtain a polymer solution as a raw material liquid.

In order to pressurize and discharge the obtained polymer solution, a device including a double pipe type spinneret, pipes connected to the spinneret, and two gear pumps disposed on the pipes was used. In the pipe between the gear pumps, the above-mentioned raw material liquid was retained at 100°C to 103°C for 15 seconds while being pressurized at 2.5 MPa. Thereafter, the raw material liquid was discharged from the pipe on an outer side while discharging an aqueous solution of 85 weight% of $\gamma$-butyrolactone from the pipe on an inner side of the double pipe type spinneret. The raw material liquid was retained for 20 seconds in a cooling bath at a temperature of 5°C consisting of an aqueous solution of 85 weight% of $\gamma$-butyrolactone, and solidified to obtain a hollow fiber membrane 5. Next, the hollow fiber membrane obtained above was stretched 1.5 times in water at 95°C. The resulting hollow fiber membrane had a pure water permeability K of 4.5 m/hr, an inner diameter $D_i$ of 580 $\mu$m, an outer diameter $D_o$ of 1,160 $\mu$m, and a strength of 560 gf/fiber. For the strength, by using a tensile tester (TENSILON (registered trademark)/RTM-100, manufactured by Toyo Baldwin Co., Ltd.), a sample having a measurement length of 50 mm was tested five or more times in an atmosphere at 25°C at a tensile rate of 50 mm/min with changing the sample, and an average value was calculated.

The obtained hollow fiber membrane 5 was cut to a length of 1.2 m, immersed in a 30 mass% glycerin aqueous solution for 1 hour, and then air-dried. Thereafter, the end portion of the hollow fiber membrane on the filtrate outlet side was plugged with a silicone adhesive (SH850A/B, manufactured by Dow Coming Toray Co., Ltd., a mixture of two agents at a mass ratio of 50:50).

Thereafter, as illustrated in FIG. 1, the container 1 (inner diameter: 97.6 mm, length: 1,100 mm) was filled with the hollow fiber membrane 5 such that the plugged end portion on the filtrate outlet side was located on the filtrate outlet 3 side. The raw water outlet 4 is provided on the filtrate outlet 3 side on the side surface of the container 1.

Subsequently, a first potting portion forming jig was attached to the raw water inlet 2 side of the container 1, and a second potting portion forming jig was attached to the filtrate outlet 3 side of the container 1. In the first potting portion forming jig, a pin having a diameter of 7 mm and a length of 100 mm was inserted in the same direction as the axial direction of the hollow fiber membrane 5 in order to open a through hole for introducing the raw water into the raw water side space 6.

As a potting agent, a bisphenol F-type epoxy resin (LST868-R14, manufactured by Huntsman Corporation) and an aliphatic amine-based curing agent (LST868-H14, manufactured by Huntsman Corporation) were mixed such that the mass ratio was 100:30, and a total of 800 g (400 g per one end) was put into a potting agent feeder.

Subsequently, a centrifugal molding machine was rotated, and the first potting portion forming jig and the second potting portion forming jig at both ends are filled with the potting agent to mold the first potting portion 8 and the second potting portion 9, and the potting agent was cured. The temperature in the centrifugal molding machine was 35°C, the rotation speed was 300 rpm, and the centrifugation time was 5 hours.

After the curing, the first potting portion forming jig, the second potting portion forming jig, and the pin were removed, and after curing at room temperature for 24 hours, the end portion of the second potting portion 9 was cut with a chip saw-type rotary blade to open the end surface of the hollow fiber membrane 5 on the filtrate outlet side.

Subsequently, a lower cap having the raw water inlet 2 and an upper cap having the filtrate outlet 3 were attached to the container 1 to form a hollow fiber membrane module. In this case, the hollow fiber membrane had an axial length L of 1.0 m, a filling rate M of 34%, and a membrane area of 8.7 m$^2$. In this case, the inner diameter $D_i$ did not satisfy the relation of the following expression (2). The inner diameter of the raw water inlet 2 was 59 mm, and the ratio $S_f/S_p$ of the cross-sectional area $S_f$ of the raw water inlet 2 to the flow path area $S_p$ in the container 1 was 0.55.

$$0.33 \times D_o - 10 \times M + 420 \leq D_i \leq 0.33 \times D_o - 10 \times M + 550 \cdots (2)$$

Filtration was performed using the obtained hollow fiber membrane module and using a simulated liquid of a microbial fermentation liquid. The simulated liquid of the microbial fermentation liquid was prepared in advance such that distilled water contained 1 wt% of peptone and 2 wt% of starch, and used as a raw water. The viscosity of the simulated liquid in this case was 2.4 mPa·s.

In the filtration test, the filtration unit illustrated in FIG. 3 was used. The volume of the raw water tank 12 was 200 L, the raw water was introduced into the hollow fiber membrane module by operating the supply pump 14, and a part of the raw water was filtered and the filtrate was sent to the filtrate tank 13. The unfiltered raw water was entirely returned to the raw water tank 12 through the raw water outlet 4. As the filtration was continued, the amount of the simulated liquid of the microbial fermentation liquid in the raw water tank 12 decreased, and therefore, the operation was performed while replenishing the insufficient raw water.

The filtration flux J was adjusted to 1.0 m/d and the cross-flow velocity v was adjusted to 1.5 m/s, and the filtration was performed until the transmembrane pressure difference increased to 150 kPa. As a result, as shown in Table 2, the amount of filtrate obtained until the transmembrane pressure difference reached 150 kPa was 0.17 m$^3$/m$^2$. The turbidity of the raw water was 250 NTU, whereas the turbidity of the filtrate was a low result of 5.4 NTU.

In addition, in parallel with the actual filtration test, the calculation of the pressure distribution in the module by simulation was performed. The calculation method was the same as the method described in Reference Example 1. As a result, the transmembrane pressure difference $\Delta P_{m,k}$ at the end portion on the filtrate outlet side was 0.03 kPa, and $\Delta P_{m,k}/\Delta P_{m,0}$, which is a ratio of $\Delta P_{m,k}$ to the transmembrane pressure difference $\Delta P_{m,0}$ at the end portion on the raw water inlet side, was 0.005. From the results of the simulation, it was considered that the backflow of the filtrate did not occur, but the difference in transmembrane pressure in the axial direction of the hollow fiber membrane 5 was calculated to be slightly large.

(Example 2)

A membrane was formed in the same manner as in Example 1 except that the temperature of the raw material liquid in the pipe between the gear pumps, and the discharge amount of the raw material liquid and the hollow portion forming liquid in the spinneret were adjusted, and the pure water permeability K of the hollow fiber membrane 5 was 4.3 m/hr, the inner diameter $D_i$ was 550 μm, the outer diameter $D_o$ was 1,080 μm, and the strength was 480 gf/fiber. The hollow fiber membrane module was prepared in the same manner as in Example 1. In this case, the filling rate M was 33%, and the inner diameter $D_i$ satisfied the relation of the expression (2). As a result, the membrane area was 9.4 m$^2$.

The filtration test was also performed in the same manner as in Example 1, and the filtration test was performed until the transmembrane pressure difference increased to 150 kPa. As a result, the amount of filtrate obtained was 0.21 m$^3$/m$^2$ as shown in Table 2.

In addition, the pressure distribution in the module was calculated by simulation in the same manner as in Example 1. As a result, the transmembrane pressure difference $\Delta P_{m,k}$ at the end portion on the filtrate outlet side was 0.7 kPa, and $\Delta P_{m,k}/\Delta P_{m,0}$, which is a ratio of $\Delta P_{m,k}$ to the transmembrane pressure difference $\Delta P_{m,0}$ at the end portion on the raw water inlet side, was 0.10. From the results of the simulation, it was considered that the backflow of the filtrate did not occur, and the difference in transmembrane pressure in the axial direction of the hollow fiber membrane 5 was calculated to be small.

(Example 3)

A membrane was formed in the same manner as in Example 1 except that the temperature of the raw material liquid in the pipe between the gear pumps, and the discharge amount of the raw material liquid and the hollow portion forming liquid in the spinneret were adjusted, and the pure water permeability K of the hollow fiber membrane 5 was 4.6 m/hr, the inner diameter $D_i$ was 500 $\mu$m, the outer diameter $D_o$ was 850 $\mu$m, and the strength was 260 gf/fiber. The hollow fiber membrane module was prepared in the same manner as in Example 1. In this case, the filling rate M was 29%, and the inner diameter $D_i$ satisfied the relation of the expression (2). As a result, the membrane area was 10.2 m$^2$.

The filtration test was also performed in the same manner as in Example 1, and the filtration test was performed until the transmembrane pressure difference increased to 150 kPa. As a result, the amount of filtrate obtained was 0.21 m$^3$/m$^2$ as shown in Table 2.

In addition, the pressure distribution in the module was calculated by simulation in the same manner as in Example 1. As a result, the transmembrane pressure difference $\Delta P_{m,k}$ at the end portion on the filtrate outlet side was 0.9 kPa, and $\Delta P_{m,k}/\Delta P_{m,0}$, which is a ratio of $\Delta P_{m,k}$ to the transmembrane pressure difference $\Delta P_{m,0}$ at the end portion on the raw water inlet side, was 0.14. From the results of the simulation, it was considered that the backflow of the filtrate did not occur, and the difference in transmembrane pressure in the axial direction of the hollow fiber membrane 5 was calculated to be small.

(Example 4)

A membrane was formed in the same manner as in Example 1 except that the temperature of the raw material liquid in the pipe between the gear pumps, and the discharge amount of the raw material liquid and the hollow portion forming liquid in the spinneret were adjusted, and the pure water permeability K of the hollow fiber membrane 5 was 4.2 m/hr, the inner diameter $D_i$ was 450 $\mu$m, the outer diameter $D_o$ was 950 $\mu$m, and the strength was 390 gf/fiber. The hollow fiber membrane module was prepared in the same manner as in Example 1. In this case, the filling rate M was 31%, and the inner diameter $D_i$ satisfied the relation of the expression (2). As a result, the membrane area was 9.8 m$^2$.

The filtration test was also performed in the same manner as in Example 1, and the filtration test was performed until the transmembrane pressure difference increased to 150 kPa. As a result, the amount of filtrate obtained was 0.22 m$^3$/m$^2$ as shown in Table 2.

In addition, the pressure distribution in the module was calculated by simulation in the same manner as in Example 1. As a result, the transmembrane pressure difference $\Delta P_{m,k}$ at the end portion on the filtrate outlet side was 5.0 kPa, and $\Delta P_{m,k}/\Delta P_{m,0}$, which is a ratio of $\Delta P_{m,k}$ to the transmembrane pressure difference $\Delta P_{m,0}$ at the end portion on the raw water inlet side, was 1.01. From the results of the simulation, it was considered that the backflow of the filtrate did not occur, and the difference in transmembrane pressure in the axial direction of the hollow fiber membrane 5 was calculated to be small.

(Example 5)

A membrane was formed in the same manner as in Example 1 except that the temperature of the raw material liquid in the pipe between the gear pumps, and the discharge amount of the raw material liquid and the hollow portion forming liquid in the spinneret were adjusted, and the pure water permeability K of the hollow fiber membrane 5 was 3.9 m/hr, the inner diameter $D_i$ was 380 $\mu$m, the outer diameter $D_o$ was 880 $\mu$m, and the strength was 380 gf/fiber. The hollow fiber membrane module was prepared in the same manner as in Example 1. In this case, the filling rate M was 30%, and the inner diameter $D_i$ did not satisfy the relation of the expression (2). As a result, the membrane area was 10.2 m$^2$.

The filtration test was also performed in the same manner as in Example 1, and the filtration test was performed until the transmembrane pressure difference increased to 150 kPa. As a result, the amount of filtrate obtained was 0.19 m$^3$/m$^2$.

In addition, the pressure distribution in the module was calculated by simulation in the same manner as in Example 1. As a result, the transmembrane pressure difference $\Delta P_{m,k}$ at the end portion on the filtrate outlet side was 9.8 kPa, and $\Delta P_{m,k}/\Delta P_{m,0}$, which is a ratio of $\Delta P_{m,k}$ to the transmembrane pressure difference $\Delta P_{m,0}$ at the end portion on the raw water inlet side, was 2.4. From the results of the simulation, it was considered that the backflow of the filtrate did not occur, but the difference in transmembrane pressure in the axial direction of the hollow fiber membrane 5 was estimated to be slightly large.

Table 2

| Performance of hollow fiber membrane module | | Example 1 | Example 2 | Example 3 | Example 4 | Example 5 |
|---|---|---|---|---|---|---|
| Module specification | Axial length L(m) | 1.0 | 1.0 | 1.0 | 1.0 | 1.0 |
| | Pure water permeability K (m/hr) | 4.5 | 4.3 | 4.6 | 4.2 | 3.9 |
| | Inner diameter $D_i$ ($\mu$m) | 580 | 550 | 500 | 450 | 380 |
| | Outer diameter $D_o$ ($\mu$m) | 1,160 | 1,080 | 850 | 950 | 880 |
| | Filling rate M (%) | 34 | 33 | 29 | 31 | 30 |
| | Applicability of expression (2) | Not satisfied | Satisfied | Satisfied | Satisfied | Not satisfied |
| | Membrane area ($m^2$) | 8.7 | 9.4 | 10.2 | 9.8 | 10.2 |
| Operation condition | Cross-flow velocity (m/s) | 1.5 | 1.5 | 1.5 | 1.5 | 1.5 |
| | Average filtration flux (m/d) | 1.0 | 1.0 | 1.0 | 1.0 | 1.0 |
| Operation result | $\Delta P_{m,k}$ (kPa) | 0.03 | 0.7 | 0.9 | 5.0 | 9.8 |
| | $\Delta P_{m,k}/\Delta P_{m,0}$ | 0.005 | 0.10 | 0.14 | 1.01 | 2.4 |
| | Amount of filtrate ($m^3/m^2$) | 0.17 | 0.21 | 0.21 | 0.22 | 0.19 |

(Example 6)

A membrane was formed in the same manner as in Example 1 except that the temperature of the raw material liquid in the pipe between the gear pumps, and the discharge amount of the raw material liquid and the hollow portion forming liquid in the spinneret were adjusted, and the pure water permeability K of the hollow fiber membrane 5 was 3.2 m/hr, the inner diameter $D_i$ was 550 $\mu$m, the outer diameter $D_o$ was 1,070 $\mu$m, and the strength was 500 gf/fiber. The hollow fiber membrane module was prepared in the same manner as in Example 1. In this case, the filling rate M was 33%, and the inner diameter $D_i$ did not satisfy the relation of the expression (2). As a result, the membrane area was 9.1 $m^2$.

The filtration test was also performed in the same manner as in Example 1, and the filtration test was performed until the transmembrane pressure difference increased to 150 kPa. As a result, the amount of filtrate obtained was 0.17 $m^3/m^2$ as shown in Table 3.

In addition, the pressure distribution in the module was calculated by simulation in the same manner as in Example 1. As a result, the transmembrane pressure difference $\Delta P_{m,k}$ at the end portion on the filtrate outlet side was 0.6 kPa, and $\Delta P_{m,k}/\Delta P_{m,0}$, which is a ratio of $\Delta P_{m,k}$ to the transmembrane pressure difference $\Delta P_{m,0}$ at the end portion on the raw water inlet side, was 0.08. From the results of the simulation, it was considered that the backflow of the filtrate did not occur, but the difference in transmembrane pressure in the axial direction of the hollow fiber membrane 5 was estimated to be slightly large.

(Example 7)

A membrane was formed in the same manner as in Example 1 except that the temperature of the raw material liquid in the pipe between the gear pumps, and the discharge amount of the raw material liquid and the hollow portion forming liquid in the spinneret were adjusted, and the pure water permeability K of the hollow fiber membrane 5 was 2.5 m/hr, the inner diameter $D_i$ was 560 $\mu$m, the outer diameter $D_o$ was 1,080 $\mu$m, and the strength was 650 gf/fiber. The hollow fiber membrane module was prepared in the same manner as in Example 1. In this case, the filling rate M was 33%, and the inner diameter $D_i$ did not satisfy the relation of the expression (2). As a result, the membrane area was 9.4 $m^2$.

The filtration test was also performed in the same manner as in Example 1, and the filtration test was performed until the transmembrane pressure difference increased to 150 kPa. As a result, the amount of filtrate obtained was 0.16 $m^3/m^2$ as shown in Table 3.

In addition, the pressure distribution in the module was calculated by simulation in the same manner as in Example 1. As a result, the transmembrane pressure difference $\Delta P_{m,k}$ at the end portion on the filtrate outlet side was 0.4 kPa, and $\Delta P_{m,k}/\Delta P_{m,0}$, which is a ratio of $\Delta P_{m,k}$ to the transmembrane pressure difference $\Delta P_{m,0}$ at the end portion on the raw water inlet side, was 0.05. From the results of the simulation, it was considered that the backflow of the filtrate did not occur, but the difference in transmembrane pressure in the axial direction of the hollow fiber membrane 5 was estimated to be slightly large.

(Example 8)

A membrane was formed in the same manner as in Example 1 except that the temperature of the raw material liquid in the pipe between the gear pumps, and the discharge amount of the raw material liquid and the hollow portion forming liquid in the spinneret were adjusted, and the pure water permeability K of the hollow fiber membrane 5 was 2.0 m/hr, the inner diameter $D_i$ was 550 $\mu$m, the outer diameter $D_o$ was 1,050 $\mu$m, and the strength was 800 gf/fiber. The hollow fiber membrane module was prepared in the same manner as in Example 1. In this case, the filling rate M was 33%, and the inner diameter $D_i$ did not satisfy the relation of the expression (2). As a result, the membrane area was 9.2 m².
The filtration test was also performed in the same manner as in Example 1, and the filtration test was performed until the transmembrane pressure difference increased to 150 kPa. As a result, the amount of filtrate obtained was 0.15 m³/m² as shown in Table 3.
In addition, the pressure distribution in the module was calculated by simulation in the same manner as in Example 1. As a result, the transmembrane pressure difference $\Delta P_{m,k}$ at the end portion on the filtrate outlet side was 0.6 kPa, and $\Delta P_{m,k}/\Delta P_{m,0}$, which is a ratio of $\Delta P_{m,k}$ to the transmembrane pressure difference $\Delta P_{m,0}$ at the end portion on the raw water inlet side, was 0.06. From the results of the simulation, it was considered that the backflow of the filtrate did not occur, but the difference in transmembrane pressure in the axial direction of the hollow fiber membrane 5 was estimated to be slightly large.

(Example 9)

A filtration test was performed using the hollow fiber membrane module prepared in Example 2. The filtration test was performed in the same manner as in Example 1 except that the cross-flow velocity v was adjusted to 1.0 m/s. As a result, the amount of filtrate obtained was 0.17 m³/m² as shown in Table 3.
In addition, the pressure distribution in the module was calculated by simulation in the same manner as in Example 1. As a result, the transmembrane pressure difference $\Delta P_{m,k}$ at the end portion on the filtrate outlet side was 2.8 kPa, and $\Delta P_{m,k}/\Delta P_{m,0}$, which is a ratio of $\Delta P_{m,k}$ to the transmembrane pressure difference $\Delta P_{m,0}$ at the end portion on the raw water inlet side, was 0.63. From the results of the simulation, it was considered that the backflow of the filtrate did not occur, and the difference in transmembrane pressure in the axial direction of the hollow fiber membrane 5 was estimated to be small.

(Example 10)

A filtration test was performed using the hollow fiber membrane module prepared in Example 2. The filtration test was performed in the same manner as in Example 1 except that the cross-flow velocity v was adjusted to 1.0 m/s and the filtration flux was adjusted to 1.2 m/d. As a result, the amount of filtrate obtained was 0.22 m³/m² as shown in Table 3.
In addition, the pressure distribution in the module was calculated by simulation in the same manner as in Example 1. As a result, the transmembrane pressure difference $\Delta P_{m,k}$ at the end portion on the filtrate outlet side was 1.2 kPa, and $\Delta P_{m,k}/\Delta P_{m,0}$, which is a ratio of $\Delta P_{m,k}$ to the transmembrane pressure difference $\Delta P_{m,0}$ at the end portion on the raw water inlet side, was 0.17. From the results of the simulation, it was considered that the backflow of the filtrate did not occur, and the difference in transmembrane pressure in the axial direction of the hollow fiber membrane 5 was estimated to be small.

Table 3

| Performance of hollow fiber membrane module | | Example 6 | Example 7 | Example 8 | Example 9 | Example 10 |
|---|---|---|---|---|---|---|
| Module specification | Axial length L(m) | 1.0 | 1.0 | 1.0 | 1.0 | 1.0 |
| | Pure water permeability K (m/hr) | 3.2 | 2.5 | 2.0 | 4.3 | 4.3 |
| | Inner diameter $D_i$ ($\mu$m) | 550 | 560 | 550 | 550 | 550 |
| | Outer diameter $D_o$ ($\mu$m) | 1,070 | 1,080 | 1,050 | 1,080 | 1,080 |
| | Filling rate M (%) | 33 | 33 | 33 | 33 | 33 |
| | Applicability of expression (2) | Not satisfied | Not satisfied | Not satisfied | Satisfied | Satisfied |
| | Membrane area ($m^2$) | 9.1 | 9.4 | 9.2 | 9.4 | 9.4 |
| Operation condition | Cross-flow velocity (m/s) | 1.5 | 1.5 | 1.5 | 1.0 | 1.6 |
| | Average filtration flux (m/d) | 1.0 | 1.0 | 1.0 | 1.0 | 1.2 |
| Operation result | $\Delta P_{m,k}$ (kPa) | 0.6 | 0.4 | 0.6 | 2.8 | 1.2 |
| | $\Delta P_{m,k}/\Delta P_{m,0}$ | 0.08 | 0.05 | 0.06 | 0.63 | 0.17 |
| | Amount of filtrate ($m^3/m^2$) | 0.17 | 0.16 | 0.15 | 0.17 | 0.22 |

(Comparative Example 1)

A membrane was formed in the same manner as in Example 1 except that the temperature of the raw material liquid in the pipe between the gear pumps, and the discharge amount of the raw material liquid and the hollow portion forming liquid in the spinneret were adjusted, and the pure water permeability K of the hollow fiber membrane 5 was 5.0 m/hr, the inner diameter $D_i$ was 700 $\mu$m, the outer diameter $D_o$ was 1,140 $\mu$m, and the strength was 440 gf/fiber. The hollow fiber membrane module was prepared in the same manner as in Example 1. In this case, the filling rate M was 35%, and the inner diameter $D_i$ did not satisfy the relation of the expression (2). As a result, the membrane area was 9.1 $m^2$.
The filtration test was also performed in the same manner as in Example 1, and the filtration test was performed until the transmembrane pressure difference increased to 150 kPa. As a result, the amount of filtrate obtained was 0.13 $m^3/m^2$ as shown in Table 4.
In addition, the pressure distribution in the module was calculated by simulation in the same manner as in Example 1. As a result, the transmembrane pressure difference $\Delta P_{m,k}$ at the end portion on the filtrate outlet side was -5.7 kPa, and $\Delta P_{m,k}/\Delta P_{m,0}$, which is a ratio of $\Delta P_{m,k}$ to the transmembrane pressure difference $\Delta P_{m,0}$ at the end portion on the raw water inlet side, was -0.6. From the results of the simulation, it was considered that the backflow of the filtrate occurred, and the difference in transmembrane pressure in the axial direction of the hollow fiber membrane 5 was also estimated to be large.

(Comparative Example 2)

A membrane was formed in the same manner as in Example 1 except that the temperature of the raw material liquid in the pipe between the gear pumps, and the discharge amount of the raw material liquid and the hollow portion forming liquid in the spinneret were adjusted, and the pure water permeability K of the hollow fiber membrane 5 was 4.1 m/hr, the inner diameter $D_i$ was 630 $\mu$m, the outer diameter $D_o$ was 1,130 $\mu$m, and the strength was 480 gf/fiber. The hollow fiber membrane module was prepared in the same manner as in Example 1. In this case, the filling rate M was 35%, and the inner diameter $D_i$ did not satisfy the relation of the expression (2). As a result, the membrane area was 9.3 $m^2$.
The filtration test was also performed in the same manner as in Example 1, and the filtration test was performed until the transmembrane pressure difference increased to 150 kPa. As a result, the amount of filtrate obtained was 0.14 $m^3/m^2$ as shown in Table 4.
In addition, the pressure distribution in the module was calculated by simulation in the same manner as in Example 1. As a result, the transmembrane pressure difference $\Delta P_{m,k}$ at the end portion on the filtrate outlet side was -3.4 kPa, and $\Delta P_{m,k}/\Delta P_{m,0}$, which is a ratio of $\Delta P_{m,k}$ to the transmembrane pressure difference $\Delta P_{m,0}$ at the end portion on the raw water inlet side, was -0.4. From the results of the simulation, it was considered that the backflow of the filtrate occurred, and the difference in transmembrane pressure in the axial direction of the hollow fiber membrane 5 was also estimated to be large.

(Comparative Example 3)

A membrane was formed in the same manner as in Example 1 except that the temperature of the raw material liquid in the pipe between the gear pumps, and the discharge amount of the raw material liquid and the hollow portion forming liquid in the spinneret were adjusted, and the pure water permeability K of the hollow fiber membrane 5 was 3.6 m/hr, the inner diameter $D_i$ was 330 $\mu$m, the outer diameter $D_o$ was 830 $\mu$m, and the strength was 320 gf/fiber. The hollow fiber membrane module was prepared in the same manner as in Example 1. In this case, the filling rate M was 28%, and the inner diameter $D_i$ did not satisfy the relation of the expression (2). As a result, the membrane area was 10.1 m$^2$.

The filtration test was also performed in the same manner as in Example 1, and the filtration test was performed until the transmembrane pressure difference increased to 150 kPa. As a result, the amount of filtrate obtained was 0.14 m$^3$/m$^2$ as shown in Table 4.

In addition, the pressure distribution in the module was calculated by simulation in the same manner as in Example 1. As a result, the transmembrane pressure difference $\Delta P_{m,k}$ at the end portion on the filtrate outlet side was 15.6 kPa, and $\Delta P_{m,k}/\Delta P_{m,0}$, which is a ratio of $\Delta P_{m,k}$ to the transmembrane pressure difference $\Delta P_{m,0}$ at the end portion on the raw water inlet side, was 5.2. From the results of the simulation, it was considered that the backflow of the filtrate did not occur, but the difference in transmembrane pressure in the axial direction of the hollow fiber membrane 5 was also estimated to be large.

(Comparative Example 4)

A filtration test was performed using the hollow fiber membrane module prepared in Example 2. The filtration test was performed in the same manner as in Example 1 except that the cross-flow velocity v was adjusted to 2.0 m/s. As a result, the amount of filtrate obtained was 0.11 m$^3$/m$^2$ as shown in Table 4.

In addition, the pressure distribution in the module was calculated by simulation in the same manner as in Example 1. As a result, the transmembrane pressure difference $\Delta P_{m,k}$ at the end portion on the filtrate outlet side was -1.4 kPa, and $\Delta P_{m,k}/\Delta P_{m,0}$, which is a ratio of $\Delta P_{m,k}$ to the transmembrane pressure difference $\Delta P_{m,0}$ at the end portion on the raw water inlet side, was -0.2. From the results of the simulation, it was considered that the backflow of the filtrate occurred, and the difference in transmembrane pressure in the axial direction of the hollow fiber membrane 5 was also estimated to be large. The reason for this is considered to be that the pressure difference on the raw water side was increased due to a high cross-flow velocity.

(Comparative Example 5)

A filtration test was performed using the hollow fiber membrane module prepared in Example 2. The filtration test was performed in the same manner as in Example 1 except that the cross-flow velocity v was adjusted to 0.8 m/s. As a result, the amount of filtrate obtained was 0.07 m$^3$/m$^2$ as shown in Table 4.

In addition, the pressure distribution in the module was calculated by simulation in the same manner as in Example 1. As a result, the transmembrane pressure difference $\Delta P_{m,k}$ at the end portion on the filtrate outlet side was 3.7 kPa, and $\Delta P_{m,k}/\Delta P_{m,0}$, which is a ratio of $\Delta P_{m,k}$ to the transmembrane pressure difference $\Delta P_{m,0}$ at the end portion on the raw water inlet side, was 1.1. From the simulation results, it was estimated that the backflow of the filtrate did not occur and the difference in transmembrane pressure in the axial direction of the hollow fiber membrane 5 was also estimated to be small. However, it was considered that since the cross-flow velocity was small, the cleaning effect of the membrane surface became small, and the progress of fouling was accelerated.

Table 4

| Performance of hollow fiber membrane module | | Comparative Example 1 | Comparative Example 2 | Comparative Example 3 | Comparative Example 4 | Comparative Example 5 |
|---|---|---|---|---|---|---|
| Module specification | Axial length L (m) | 1.0 | 1.0 | 1.0 | 1.0 | 1.0 |
| | Pure water permeability K (m/hr) | 5.0 | 4.1 | 3.6 | 4.3 | 4.3 |
| | Inner diameter $D_i$ ($\mu$m) | 700 | 630 | 330 | 550 | 550 |
| | Outer diameter $D_o$ ($\mu$m) | 1,140 | 1,130 | 830 | 1,080 | 1,080 |
| | Filling rate M (%) | 35 | 35 | 28 | 33 | 33 |
| | Applicability of expression (2) | Not satisfied | Not satisfied | Not satisfied | Satisfied | Satisfied |
| | Membrane area (M2) | 9.1 | 9.3 | 10.1 | 9.4 | 9.4 |
| Operation condition | Cross-flow velocity (m/s) | 1.5 | 1.5 | 1.5 | 2.0 | 0.8 |
| | Average filtration flux (m/d) | 1.0 | 1.0 | 1.0 | 1.0 | 1.0 |
| Operation result | $\Delta P_{m,k}$ (kPa) | -5.7 | -3.4 | 15.6 | -1.4 | 3.7 |
| | $\Delta P_{m,k}/\Delta P_{m,0}$ | -0.6 | -0.4 | 5.2 | -0.2 | 1.1 |
| | Amount of filtrate ($m^3/m^2$) | 0.13 | 0.14 | 0.14 | 0.11 | 0.07 |

(Comparative Example 6)

A membrane was formed in the same manner as in Example 1 except that the temperature of the raw material liquid in the pipe between the gear pumps, and the discharge amount of the raw material liquid and the hollow portion forming liquid in the spinneret were adjusted, and the pure water permeability K of the hollow fiber membrane 5 was 1.5 m/hr, the inner diameter $D_i$ was 540 $\mu$m, the outer diameter $D_o$ was 1,070 $\mu$m, and the strength was 990 gf/fiber. The hollow fiber membrane module was prepared in the same manner as in Example 1. In this case, the filling rate M was 33%, and the inner diameter $D_i$ did not satisfy the relation of the expression (2). As a result, the membrane area was 9.4 $m^2$.

The filtration test was also performed in the same manner as in Example 1, and the filtration test was performed until the transmembrane pressure difference increased to 150 kPa. As a result, the amount of filtrate obtained was 0.09 $m^3/m^2$ as shown in Table 5.

In addition, the pressure distribution in the module was calculated by simulation in the same manner as in Example 1. As a result, the transmembrane pressure difference $\Delta P_{m,k}$ at the end portion on the filtrate outlet side was 2.2 kPa, and $\Delta P_{m,k}/\Delta P_{m,0}$, which is a ratio of $\Delta P_{m,k}$ to the transmembrane pressure difference $\Delta P_{m,0}$ at the end portion on the raw water inlet side, was 0.19. From the results of the simulation, it was considered that the backflow of the filtrate did not occur, and the difference in transmembrane pressure in the axial direction of the hollow fiber membrane 5 was also estimated to be small, but since the water permeability was low, the progress of fouling of the hollow fiber membrane was fast, and the amount of filtrate obtained was small.

(Comparative Example 7)

A membrane was formed in the same manner as in Example 1 except that the temperature of the raw material liquid in the pipe between the gear pumps, and the discharge amount of the raw material liquid and the hollow portion forming liquid in the spinneret were adjusted, and the pure water permeability K of the hollow fiber membrane 5 was 21.0 m/hr, the inner diameter $D_i$ was 590 $\mu$m, the outer diameter $D_o$ was 1,040 $\mu$m, and the strength was 170 gf/fiber. The hollow fiber membrane module was prepared in the same manner as in Example 1. In this case, the filling rate M was 33%, and the inner diameter $D_i$ did not satisfy the relation of the expression (2). As a result, the membrane area was 9.4 m$^2$.

The filtration test was also performed in the same manner as in Example 1, and the filtration test was performed until the transmembrane pressure difference increased to 150 kPa. As a result, the amount of filtrate obtained was more than 0.30 m$^3$/m$^2$ as shown in Table 5.

In addition, the pressure distribution in the module was calculated by simulation in the same manner as in Example 1. As a result, the transmembrane pressure difference $\Delta P_{m,k}$ at the end portion on the filtrate outlet side was -0.9 kPa, and $\Delta P_{m,k}/\Delta P_{m,0}$, which is a ratio of $\Delta P_{m,k}$ to the transmembrane pressure difference $\Delta P_{m,0}$ at the end portion on the raw water inlet side, was 0.25. From the results of the simulation, it was considered that the backflow of the filtrate occurred, and the difference in transmembrane pressure in the axial direction of the hollow fiber membranes 5 was also estimated to be small, but since the water permeability was high, leakage of the suspended components in the raw water was confirmed. The turbidity of the raw water was 250 NTU, whereas the turbidity of the filtrate was a high result of 15 NTU. Therefore, the blocking performance was insufficient. In addition, when the inside was confirmed after the operation was completed, a position where the hollow fiber membrane 5 was broken was observed. Since the strength was low, it was considered that the hollow fiber membrane 5 was broken due to the stream of cross flow.

Table 5

| Performance of hollow fiber membrane module | | Comparative Example 6 | Comparative Example 7 |
|---|---|---|---|
| Module specification | Axial length L (m) | 1.0 | 1.0 |
| | Pure water permeability K (m/hr) | 1.5 | 21.0 |
| | Inner diameter $D_i$ ($\mu$m) | 540 | 590 |
| | Outer diameter $D_o$ ($\mu$m) | 1,070 | 1,040 |
| | Filling rate M (%) | 33 | 33 |
| | Applicability of expression (2) | Not satisfied | Not satisfied |
| | Membrane area (m$^2$) | 9.4 | 9.4 |
| Operation condition | Cross-flow velocity (m/s) | 1.5 | 1.5 |
| | Average filtration flux (m/d) | 1.0 | 1.0 |
| Operation result | $\Delta P_{m,k}$ (kPa) | 2.2 | -0.9 |
| | $\Delta P_{m,k}/\Delta P_{m,0}$ | 0.19 | 0.25 |
| | Amount of filtrate (m$^3$/m$^2$) | 0.09 | >0.30 |

(Comparative Example 8)

Using the hollow fiber membrane module prepared in Example 1, the pressure distribution in the module was calculated by simulation in a case where the dead-end filtration operation was performed instead of the cross-flow filtration operation. The calculation method was the same as the method described in Reference Example 1 except that the cross-flow velocity was set to zero.

As a result of the simulation, as shown in Table 6, the transmembrane pressure difference $\Delta P_{m,k}$ at the end portion of the hollow fiber membrane 5 on the filtrate outlet side was 6.5 kPa, and $\Delta P_{m,k}/\Delta P_{m,0}$, which is a ratio of $\Delta P_{m,k}$ to the transmembrane pressure difference $\Delta P_{m,0}$ at the end portion of the hollow fiber membrane 5 on the raw water inlet side, was 108.9. Since the dead-end filtration was performed, from the results of the simulation, the backflow of the filtrate did not occur, but the difference in transmembrane pressure in the axial direction of the hollow fiber membrane 5 was calculated to be large.

(Comparative Example 9)

Using the hollow fiber membrane module prepared in Example 3, the pressure distribution in the module was calculated by simulation in a case where the dead-end filtration operation was performed instead of the cross-flow filtration operation. The calculation method was the same as the method described in Reference Example 1 except that the cross-flow velocity was set to zero.

As a result of the simulation, as shown in Table 6, the transmembrane pressure difference $\Delta P_{m,k}$ at the end portion of the hollow fiber membrane 5 on the filtrate outlet side was 7.4 kPa, and $\Delta P_{m,k}/\Delta P_{m,0}$, which is a ratio of $\Delta P_{m,k}$ to the transmembrane pressure difference $\Delta P_{m,0}$ at the end portion of the hollow fiber membrane 5 on the raw water inlet side, was 264.2. Since the dead-end filtration was performed, from the results of the simulation, the backflow of the filtrate did not occur, but the difference in transmembrane pressure in the axial direction of the hollow fiber membrane 5 was calculated to be large, which was worse than that in Comparative Example 8.

(Comparative Example 10)

Using the hollow fiber membrane module prepared in Example 5, the pressure distribution in the module was calculated by simulation in a case where the dead-end filtration operation was performed instead of the cross-flow filtration operation. The calculation method was the same as the method described in Reference Example 1 except that the cross-flow velocity was set to zero.

As a result of the simulation, as shown in Table 6, the transmembrane pressure difference $\Delta P_{m,k}$ at the end portion of the hollow fiber membrane 5 on the filtrate outlet side was 13.9 kPa, and $\Delta P_{m,k}/\Delta P_{m,0}$, which is a ratio of $\Delta P_{m,k}$ to the transmembrane pressure difference $\Delta P_{m,0}$ at the end portion of the hollow fiber membrane 5 on the raw water inlet side, was 13010.8. Since the dead-end filtration was performed, from the results of the simulation, the backflow of the filtrate did not occur, but the difference in transmembrane pressure in the axial direction of the hollow fiber membrane 5 was calculated to be large, and it was confirmed that the difference tended to be worse than that in Comparative Example 9.

Table 6

| Performance of hollow fiber membrane module | | Comparative Example 8 | Comparative Example 9 | Comparative Example 10 |
|---|---|---|---|---|
| Module specification | Axial length L (m) | 1.0 | 1.0 | 1.0 |
| | Pure water permeability K (m/hr) | 4.5 | 4.6 | 3.9 |
| | Inner diameter $D_i$ ($\mu$m) | 580 | 500 | 380 |
| | Outer diameter $D_o$ ($\mu$m) | 1,160 | 850 | 880 |
| | Filling rate M (%) | 34 | 29 | 30 |
| | Applicability of expression (2) | Not satisfied | Satisfied | Not satisfied |
| | Membrane area (m$^2$) | 8.7 | 10.2 | 10.2 |
| Operation condition | Cross-flow velocity (m/s) | 0.0 | 0.0 | 0.0 |
| | Average filtration flux (m/d) | 1.0 | 1.0 | 1.0 |
| Operation result | $\Delta P_{m,k}$ (kPa) | 6.5 | 7.4 | 13.9 |
| | $\Delta P_{m,k}/\Delta P_{m,0}$ | 108.9 | 264.2 | 13010.8 |

From the above results, in the dead-end filtration operation, it was predicted that the difference in transmembrane pressure in the axial direction is increased and the filterability is deteriorated as the inner diameter is decreased, whereas in the cross-flow filtration operation, the difference in transmembrane pressure in the axial direction can be reduced by appropriately controlling the inner diameter, and the effect of increasing the filtration amount by preventing the progress of fouling can be confirmed.

Although the present invention has been described in detail using specific embodiments, it will be apparent to those skilled in the art that various modifications and variations are possible without departing from the spirit and scope of the present invention. The present application is based on Japanese patent application (Japanese Patent Application No. 2020-112493) filed on June 30, 2020, and the entire application is incorporated herein by reference.

INDUSTRIAL APPLICABILITY

The hollow fiber membrane module for cross-flow filtration and the operation method thereof of the present invention are preferably applied to membrane filtration of a raw water in a water treatment field such as drinking water production, water purification treatment, and wastewater treatment, a fermentation field involving culturing of microorganisms or cultured cells, a food industry field, or the like.

REFERENCE SIGNS LIST

1: container
2: raw water inlet
3: filtrate outlet
4: raw water outlet
5: hollow fiber membrane
6: raw water side space
7: filtrate side space
8: first potting portion
9: second potting portion
10: hollow fiber membrane module for cross-flow filtration
12: raw water tank
13: filtrate tank
14: supply pump
15: circulation pump
21: concentrate valve
22: filtrate valve
31: concentrate flowmeter
32: filtrate flowmeter
41: raw water introduction pressure gauge
42: raw water lead-out pressure gauge
43: filtrate lead-out pressure gauge
44: filtrate introduction pressure gauge

**Claims**

1. A hollow fiber membrane module for cross-flow filtration comprising:

   a container having at least a raw water inlet, a raw water outlet, and a filtrate outlet; and
   a plurality of hollow fiber membranes housed in the container,
   wherein in the plurality of hollow fiber membranes, an end portion on a raw water inlet side is sealed and an end portion on a filtrate outlet side is opened, and the plurality of hollow fiber membranes have a potting portion fixed by an adhesive at least in the end portion on the filtrate outlet side,
   a raw water side space in the container to which the raw water inlet and the raw water outlet are connected and a filtrate side space in the container to which the filtrate outlet is connected are separated by the plurality of hollow fiber membranes and the potting portion, and the raw water side space is in contact with an outer surface of the hollow fiber membranes, and
   a pure water permeability K ($m^3/m^2/hr/50$ kPa) of the hollow fiber membranes and an inner diameter $D_i$ ($\mu$m) of the hollow fiber membranes satisfy the following requirements:

$$2.0 \leq K \leq 20.0;$$

and

$$350 \leq D_i \leq 600.$$

2. The hollow fiber membrane module for cross-flow filtration according to claim 1, wherein an axial length L (m) of the hollow fiber membranes in contact with a raw water satisfies $0.5 \leq L \leq 2.0$.

3. The hollow fiber membrane module for cross-flow filtration according to claim 1 or 2, wherein an outer diameter $D_o$ ($\mu$m), a filling rate M (%), and the inner diameter $D_i$ ($\mu$m) of the hollow fiber membranes satisfy the following expression (2):

$$0.33 \times D_o - 10 \times M + 420 \leq D_i \leq 0.33 \times D_o - 10 \times M + 550 \cdots (2).$$

4. The hollow fiber membrane module for cross-flow filtration according to claim 3, wherein the filling rate M (%) satisfies the following requirement:

$$25 \leq M \leq 45.$$

5. The hollow fiber membrane module for cross-flow filtration according to claim 3 or 4, wherein the outer diameter $D_o$ ($\mu$m) satisfies the following requirement:

$$850 \leq D_o \leq 1500.$$

6. The hollow fiber membrane module for cross-flow filtration according to claim 1 or 2, wherein a ratio $D_t/D_i$ of a membrane thickness $D_t$ ($\mu$m) of the hollow fiber membranes to the inner diameter $D_i$ ($\mu$m) satisfies the following requirement:

$$0.40 \leq D_t/D_i \leq 0.65.$$

7. The hollow fiber membrane module for cross-flow filtration according to any one of claims 1 to 6, wherein a strength of the hollow fiber membranes is 250 gf/fiber or more.

8. The hollow fiber membrane module for cross-flow filtration according to any one of claims 1 to 7, wherein a ratio $S_f/S_p$ of a cross-sectional area $S_f$ of the raw water inlet to a flow path area $S_p$ in the container is 0.35 or more.

9. An operation method of a hollow fiber membrane module, comprising performing cross-flow filtration using the hollow fiber membrane module for cross-flow filtration according to any one of claims 1 to 8 such that a filtration flux J (m/d) and a cross-flow velocity v (m/s) satisfy the following requirements:

$$0.5 \leq J \leq 2.0;$$

and

$$1.0 \leq v \leq 1.8.$$

10. The operation method of a hollow fiber membrane module according to claim 9, wherein the cross-flow filtration is performed to a raw water having a turbidity of 20 NTU or more and a TOC concentration of 1,000 mg/L or more.

11. The operation method of a hollow fiber membrane module according to claim 10, wherein a filtrate has a turbidity of 10 NTU or less, and a TOC concentration of 1,000 mg/L or more.

12. The operation method of a hollow fiber membrane module according to any one of claims 9 to 11, wherein the cross-flow filtration is performed to a raw water having a viscosity of 2 mPa·s or more.

**FIG. 1**

**FIG. 2**

FIG. 3

FIG. 4

*FIG. 5*

(a)                                                        (b)

FILTRATE

RAW WATER

n = k

MICRO-
SEGMENT n

$Q_{i,n}$

$Q_{p,n}$

$\Delta l$

$Q_{i,n-1}$

n = 0

*FIG. 6*

## INTERNATIONAL SEARCH REPORT

| | International application No. |
|---|---|
| | PCT/JP2021/024727 |

**A. CLASSIFICATION OF SUBJECT MATTER**
Int. Cl. B01D63/02(2006.01)i, B01D69/00(2006.01)i, B01D69/02(2006.01)i
FI: B01D63/02, B01D69/02, B01D69/00

According to International Patent Classification (IPC) or to both national classification and IPC

**B. FIELDS SEARCHED**

Minimum documentation searched (classification system followed by classification symbols)
Int. Cl. B01D63/02, B01D69/00, B01D69/02

Documentation searched other than minimum documentation to the extent that such documents are included in the fields searched
Published examined utility model applications of Japan      1922-1996
Published unexamined utility model applications of Japan    1971-2021
Registered utility model specifications of Japan            1996-2021
Published registered utility model applications of Japan    1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2017/115769 A1 (TORAY INDUSTRIES, INC.) 06 July | 1-8 |
| Y | 2017 (2017-07-06), claims, paragraphs [0001], | 2, 8-10, 12 |
| A | [0002], [0008], [0009], [0016]-[0026], [0044]- | 11 |
| | [0046], [0109], [0110], [0214], [0215], [0268]- | |
| | [0275], [0309], [0310], [0330]-[0347], [0373]- | |
| | [0399], fig. 1, 10 | |
| | | |
| X | WO 2017/209150 A1 (TORAY INDUSTRIES, INC.) 07 | 1-2, 4-5, 8-10 |
| Y | December 2017 (2017-12-07), claims, paragraphs | 2, 8-10, 12 |
| A | [0001], [0002], [0006], [0011]-[0026], [0039], | 11 |
| | [0091], [0131], [0146]-[0148], [0241]-[0244], | |
| | [0248], [0259]-[0290], fig. 1 | |

☒ Further documents are listed in the continuation of Box C.       ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 03.09.2021 | 14.09.2021 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

INTERNATIONAL SEARCH REPORT

| International application No. |
| --- |
| PCT/JP2021/024727 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X<br>Y<br>A | JP 2018-51483 A (TORAY INDUSTRIES, INC.) 05 April 2018 (2018-04-05), claims, paragraphs [0001], [0002], [0020]-[0028], [0041]-[0057], [0070], [0112]-[0129], [0151], [0188], [0214]-[0264], fig. 1-11, 17 | 1-6, 8<br>2, 8-10, 12<br>11 |
| Y<br>A | JP 2019-166474 A (SUMITOMO ELECTRIC INDUSTRIES, LTD.) 03 October 2019 (2019-10-03), claims | 2, 8-10, 12<br>11 |
| Y<br>A | JP 2006-205127 A (TOYOBO CO., LTD.) 10 August 2006 (2006-08-10), paragraph [0061] | 2, 8-10, 12<br>11 |
| Y<br>A | JP 2005-349379 A (DAICEN MEMBRANE SYSTEMS LTD.) 22 December 2005 (2005-12-22), paragraphs [0056], [0057] | 12<br>11 |

Form PCT/ISA/210 (continuation of second sheet) (January 2015)

INTERNATIONAL SEARCH REPORT

Information on patent family members

International application No.

PCT/JP2021/024727

| Patent Documents referred to in the Report | Publication Date | Patent Family | Publication Date |
|---|---|---|---|
| WO 2017/115769 A1 | 06.07.2017 | US 2019/0015786 A1 claims, paragraphs [0001], [0002], [0010], [0011], [0058]-[0068], [0088]-[0090], [0167], [0168], [0290], [0291], [0349]-[0356], [0394], [0395], [0434]-[0463], [0490]-[0522], fig. 1, 10 EP 3398674 A1 CN 108430610 A KR 10-2018-0098269 A | |
| WO 2017/209150 A1 | 07.12.2017 | US 2020/0206689 A1 claims, paragraph [0001], [0002], [0010], [0044]-[0059], [0072], [0133], [0177], [0192]-[0194], [0298]-[0301], [0305], [0348]-[0406], fig. 1 EP 3466526 A1 CN 109195689 A KR 10-2019-0013771 A | |
| JP 2018-51483 A | 05.04.2018 | (Family: none) | |
| JP 2019-166474 A | 03.10.2019 | (Family: none) | |
| JP 2006-205127 A | 10.08.2006 | US 2009/0050555 A1 paragraphs [0125]-[0128] WO 2006/080482 A1 | |
| JP 2005-349379 A | 22.12.2005 | JP 2005-329393 A JP 2005-329394 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0411927 A
- JP H0796152 A

- JP 2020112493 A